# EUROPÄISCHE PATENTSCHRIFT

(11) **EP 3 947 540 B1**
(45) Veröffentlichungstag und Bekanntmachung des Hinweises auf die Patenterteilung: **16.08.2023**
(21) Anmeldenummer: 20715790.0
(22) Anmeldetag: 24.03.2020
(51) Int. Cl.: C08J 11/04, C08K 5/20, C08K 5/17, C08K 5/103, C08K 5/06, C08K 5/053, C08K 5/00, C08K 5/11, C08K 5/12

(54) **VERFAHREN ZUR STABILISIERUNG VON THERMOPLASTISCHEN KUNSTSTOFF-REZYKLATEN SOWIE STABILISIERTE KUNSTSTOFFZUSAMMENSETZUNGEN UND HIERAUS HERGESTELLTE FORMMASSEN UND FORMTEILE**
METHOD FOR STABILIZING THERMOPLASTIC RECYCLATES, STABILIZED PLASTIC COMPOSITIONS, AND MOLDING COMPOUNDS AND MOLDED PARTS PRODUCED THEREFROM
PROCÉDÉ POUR STABILISER DES PRODUITS RECYCLÉS À BASE DE MATIÈRES PLASTIQUES THERMOPLASTIQUES ET COMPOSITIONS DE MATIÈRES PLASTIQUES STABILISÉES AINSI QUE MASSES À MOULER ET PIÈCES MOULÉES FABRIQUÉES À PARTIR DE CELLES-CI

(30) Priorität: 26.03.2019 DE 102019204160
(43) Veröffentlichungstag der Anmeldung: 09.02.2022
(73) Patentinhaber: Fraunhofer-Gesellschaft zur Förderung der angewandten Forschung e.V., 80686 München (DE)
(72) Erfinder: PFAENDNER, Rudolf, 64289 Darmstadt (DE)
(74) Vertreter: Pfenning, Meinig & Partner mbB
(86) Internationale Anmeldenummer: PCT/EP2020/058188
(87) Internationale Veröffentlichungsnummer: WO 2020/193563

(56) Entgegenhaltungen:
- EP-A1- 0 881 253
- EP-A1- 2 641 933
- JP-A- H09 176 416
- JP-A- 2005 179 517

## Beschreibung

Die vorliegende Erfindung betrifft ein Verfahren zur Stabilisierung von thermoplastischen Kunststoff-Rezyklaten bzw. vorgeschädigten Kunststoffen gegen oxidativen, thermischen und/oder aktinischen Abbau. Beim erfindungsgemäßen Verfahren wird als stabilisierende Komponente mindestens ein substituierter Zucker, ausgewählt aus der Gruppe bestehend aus mindestens einem Ester und/oder Ether eines Alditols mit mindestens 4 Kohlenstoffatomen oder eines Cyclitols, mindestens einem Ester einer Zuckersäure, mindestens einem Amid und/oder substiuiertem Amin eines Aminozuckers, sowie Mischungen und Kombinationen hiervon, in ein thermoplastischen Kunststoff-Rezyklat sowie ggf. zusätzlich hierzu mindestens ein primäres Antioxidans und/oder mindestens ein sekundäres Antioxidans in ein thermoplastisches Kunststoff-Rezyklat eingebracht. Durch das erfindungsgemäße Verfahren können Kunststoff-Rezyklate mit hoher Wirksamkeit und auf sehr umweltfreundliche und kostengünstige Weise gegen oxidativen, thermischen und/oder aktinischen Abbau stabilisiert werden. Zudem betrifft die vorliegende Erfindung auch entsprechende Rezyklat-basierte Kunststoffzusammensetzungen sowie hieraus hergestellte Formmassen und Formteile. Ferner betrifft die vorliegende Erfindung auch Stabilisator-Zusammensetzungen sowie deren Verwendung zur Stabilisierung von thermoplastischen Kunststoff-Rezyklaten gegen oxidativen, thermischen und/oder aktinischen Abbau.

Kunststoff-Rezyklate sind ein wachsender Markt und ein wichtiges Element in der Kreislaufwirtschaft von Rohstoffen, wobei idealerweise Rezyklate dann Neukunststoffe mit einem identischen oder zumindest vergleichbaren Eigenschaftsprofil ersetzen sollen. Allerdings kommt es bei Rezyklaten aus der Produktion oder von Altkunststoffen während der ersten Verarbeitungsschritte (z.B. Compoundierung, Spritzguss) und der Anwendung oft über viele Jahre zu irreversiblen Veränderungen in der Polymerkette durch mechano-chemische, chemische oder lichtinduzierte Prozesse (siehe z.B. R. Pfaendner et al., Angew. Makromol. Chemie 1995, 232, 193-227; J. Pospisil et al., Pol. Degr. Stab. 1995, 48, 351-358). Durch Radikalreaktionen in der Anwesenheit von Sauerstoff werden neue chemische Gruppen in der Polymerkette erzeugt und/oder die Zusammensetzung des Polymeren geändert. Die Konzentration dieser neu formierten Gruppen nimmt mit der Einsatzzeit und dem Einsatzbereich (UV-Licht, hohe Temperaturen, Kontaktmedien) zu. Die strukturellen Inhomogenitäten eines Rezyklates beeinflussen dann die Kunststoff-Eigenschaften, wie z.B. die mechanischen und physikalischen Eigenschaften sowie das Verarbeitungsverhalten.

Weiterhin gilt, dass Rezyklate oder vorgeschädigte Kunststoffe oxidationsempfindlicher sind als Neumaterial, da Abbauprodukte als Initiatorstellen für eine weitere Oxidation oder als Prodegradantien wirken (A. S. Maxwell, Pol. Eng. Sci. 2008, 381-385; I. H. Craig, J. R. White, J. Mater. Sci . 2006, 41, 993-1006, L. Luzuriaga, J. Kovarova, I. Fortelny, Pol. Degr. Stab. 2006, 91, 1226-1232). Um eine Qualitätsverbesserung von Kunststoff-Rezyklaten zu erreichen, ist die Nachstabilisierung mit ausgewählten Stabilisatoren eine wesentliche Methode. Die eingesetzten Stabilisatoren schützen das Rezyklat vor weiterer oxidativen (oder photooxidativen) Schädigung. Die optimierte Stabilisator-Zusammensetzung für ein Rezyklat unterscheidet sich jedoch aufgrund der beschriebenen strukturellen Abweichungen von der Stabilisierungszusammensetzung der Neuware (siehe z.B. R. Pfaendner, Kunststoffe International 12/2015, 41-44).

Aufgrund der heute anerkannten Unterschiede zwischen Kunststoff-Neuware und Kunststoff-Rezyklaten sind spezielle Rezyklat-Stabilisator-Zusammensetzungen bekannt und auch als kommerzielle Produkte erhältlich (z.B. Recyclostab Serie der Fa. BYK-Chemie GmbH, Wesel ). Bekannte technische Stabilisierungslösungen, die den Anforderungen von RezyklatenRechnung tragen sind beispielsweise:
- Stabilisierungs-Zusammensetzung bestehend aus einem phenolischen Antioxidans, einem Phosphit und einem Fettsäuresalz (EP 0662101).
- Stabilisierungs-Zusammensetzung bestehend aus einem phenolischen Antioxidans, einem Phosphit und einem Metalloxid wie Calciumoxid (US 6525158, US 6251972).
- Stabilisierungs-Zusammensetzung bestehend aus einem phenolischen Antioxidans und einem polyfunktionellen Epoxid (EP 0702704).
- Stabilisierung durch ein makrozyklisches Piperidin (US 5789470).
- Stabilisierungs-Zusammensetzung bestehend aus einem sekundären aromatischen Amin und einem polyfunktionellen Epoxid (WO 97/30112).
- Entfärbung von geschädigten Pololefinen durch ein Hydroxylamin (EP 470048)
- Mischung aus Antioxidantien, Gleitmittel, Antiblockmittel, UV-Stabilisatoren und Antistatika für Rezyklatfolien (DD 288161)
- Stabilisierungs-Zusammensetzung für gemischte Kunststoffe bestehend aus einem phenolischen Antioxidans und einem Phosphit/Phosphonit (EP 0506614)
- Stabilisierung von Polycarbonat-Blends mit post-consumer Polystyrol Rezyklaten durch Säuren (WO 2014/141178)
- Stabilisierung von halogenhaltigen Rezyklaten durch 6-Aminouracile (EP 1426 406)

Weiterhin, ist die Stabilisierung von thermoplastischen Kunststoffe durch Zuckerderivate bekannt (EP2641933).

Trotz der bekannten Lösungen besteht nach wie vor der Bedarf für besonders leistungsfähige bzw. wirkungsvolle, umweltfreundliche und kostengünstige Möglichkeiten zur Stabilisierung von Kunststoffen-Rezyklaten bzw. dafür verwendbare Stabilisator-Zusammensetzungen.

Rezyklate haben hierbei bereits einen Lebenszyklus durchlaufen und waren bereits zu Kunststoffformteilen kompoundiert und als solche beispielsweise mechanischen, chemischen, aktinischen und/oder oxidativen Belastungen ausgesetzt. Hierdurch resultieren bestimmte Fehlstellen in der Polymerkette, die bei einer erneuten Verarbeitung der Rezyklate eine weitere, überproportionale Schädigung des zugrundeliegenden Kunststoffmaterials bewirken. Die vorhandenen Schädigungsstellen im Polymer dienen hierbei als Initiatorstellen für einen beschleunigten und erweiterten Abbau des Polymers. Insbesondere sind eine Erniedrigung des Molekulargewichts, eine Verbreiterung der Molekulargewichtsverteilung, eine Herabsetzung der mechanischen Eigenschaften und eine Erhöhung der Lichtempfindlichkeit typische Erscheinungsbilder, die bei rezyklierten Kunststoffen, insbesondere bei deren erneuter Verarbeitung zutage treten. Das insgesamt verschlechterte Eigenschaftsprofil ist somit einer erneuten Verarbeitung eher abträglich.

Ausgehend hiervon war es somit die Aufgabe der vorliegenden Erfindung, ein Verfahren zur Stabilisierung von thermoplastischen Kunststoff-Rezyklaten anzugeben, mit welchem die Kunststoff-Rezyklate auf sehr wirkungsvolle, umweltfreundliche und kostengünstige Weise gegen oxidativen, thermischen und/oder aktinischen Abbau stabilisiert werden können.

Diese Aufgabe wird hinsichtlich eines Verfahrens zur Stabilisierung von thermoplastischen Kunststoff-Rezyklaten mit den Merkmalen des Patentanspruchs 1, hinsichtlich einer Kunststoffzusammensetzung mit den Merkmalen des Patentanspruchs 19, hinsichtlich eines Formteils, welches aus der Kunststoffzusammensetzung herstellbar ist, mit den Merkmalen des Patentanspruchs 26, hinsichtlich einer Stabilisator-Zusammensetzung mit den Merkmalen des Patentanspruchs 27, hinsichtlich der Verwendung eines substituierten Zuckers mit den Merkmalen des Patentanspruchs 29 sowie hinsichtlich der Verwendung der Stabilisator-Zusammensetzungen mit den Merkmalen des Patentanspruchs 30 gelöst. Dabei stellen die jeweilig abhängigen Patentansprüche vorteilhafte Weiterbildungen dar.

Erfindungsgemäß wird somit ein Verfahren zur Stabilisierung von thermoplastischen Kunststoff-Rezyklaten gegen oxidativen, thermischen und/oder aktinischen Abbau angegeben, bei welchem mindestens ein substituierter Zucker, ausgewählt aus der Gruppe bestehend aus
(a1) mindestens einem Ester und/oder Ether eines Alditols mit mindestens 4 Kohlenstoffatomen oder eines Cyclitols,
(a2) mindestens einem Ester einer Zuckersäure, und/oder
(a3) mindestens einem Amid und/oder substiuiertem Amin eines Aminozuckers,
sowie Mischungen und Kombinationen hiervon (nachfolgend auch als "Komponenten (A)" bezeichnet)
in ein thermoplastischen Kunststoff-Rezyklat eingebracht wird.

Bei den eingesetzten substituieren Zuckern kann es sich um jeweils chemisch reine Ester, Ether und Amide handeln. Ebenso ist es möglich, dass die jeweiligen substituierten Zucker ein gemischtes Substitutionsmuster aufweisen. Beispielsweise kann es sein, dass ein substituierter Zucker sowohl eine Ester- als auch eine Amid-Funktionalisierung aufweist.

Der/die Substituenten der substituierten Zucker können aliphatische, aromatische oder cycloaliphatische Kohlenwasserstoffgruppen, gegebenenfalls unterbrochen von Sauerstoff-, Schwefel- oder Stickstoffatomen sein, bevorzugt sind Gruppen mit mindestens 4, besonders bevorzugt mit mindestens 6 CH₂-Gruppen sein.

Die Herstellung der substituierten Zucker kann nach bekannten Methoden, die z.B. in den folgenden Literaturstellen beschrieben sind, erfolgen:
E. Reinefeld, G. Klaunberg, Tenside 1968, 5 (9-10), 266-270
DE 2423278, B.V. Chemie Combinatie Amsterdam C.C.A.

A.F. Artamanov et al. Chemistry of Natural Compounds, 2001, 37, 124-125 Eine bevorzugte Herstellungsmethode ist dabei regioselektiv via enzymatischen Prozessen:
Y. Watanabe et al., Tetrahedron 2013, 69, 4657-4664
W. Wei et al. Green Chemistry 2015, 17, 3475-3489

Da die den Kunststoff-Rezyklaten zugrundeliegenden thermoplastischen Kunststoffe bei deren Herstellung im Regelfall schon primäre und/oder sekundäre Antioxidantien zugesetzt wurden, ist es bei Wiederverarbeitung von gebrauchten oder bereits verwendeten Kunststoffen, also Rezyklaten nicht unbedingt notwendig, bei Aufarbeitung dieser Rezyklate erneut primäre und/oder sekundäre Antioxidantien zuzugeben. Überraschenderweise wurde gefunden, dass es ausreicht, mindestens einen substituierten Zucker wie voranstehend definiert in die Kunststoffrezyklate einzuarbeiten, um eine stabilisierende Wirkung zu erzielen, die bei Vorhandensein von primären und/oder sekundären Oxidantien auf synergistische Weise besonders hoch ausfällt.

Gemäß der vorliegenden Erfindung wird unter einem Kunststoff-Rezyklat ein Kunststoff-Rezyklat nach der begrifflichen Definition gemäß Norm DIN EN 15347:2007 verstanden. Im Weiteren bestehen für viele Arten von Kunststoff-Rezyklaten einschlägige internationale Normen. Für PET-Kunststoff-Rezyklate ist beispielsweise die DIN EN 15353:2007 einschlägig. PS-Rezyklate werden in DIN EN 15342:2008 näher beschrieben. PE-Rezyklate werden in DIN EN 15344:2008 behandelt. PP-Rezyklate werden in DIN EN 15345:2008 charakterisiert. Zum Zwecke der entsprechenden speziellen Kunststoff-Rezyklate macht sich die vorliegende Patentanmeldung die Definitionen dieser internationalen Normen zu Eigen.

Kunststoff-Rezyklate weisen im Gegensatz zu Neukunststoffen zumeist eine Vorschädigung auf, d.h. durch oxidative oder (photo)oxidative Prozesse werden neue chemische Gruppen auf der Polymerkette erzeugt. Bei Polyolefinen z.B. sind dies vorwiegend Carbonylgruppen, die bei Neuware nicht oder nur in sehr untergeordnetem Maß vorhanden sind. Die Konzentration der Carbonylgruppen ist daher gleichzeitig ein Maß für die Vorschädigung des Polymeren. Die Konzentration an Carbonylgruppen kann nach bekannten analytischen Verfahren wie z.B. Infrarot-Spektroskopie bestimmt werden, wie sie beispielsweise in E. Richaud et al. Pol. Degr. Stab. 2009, 94, 410-420 beschrieben ist. Hierbei erfolgt eine Messung der Absorption der Carbonylschwingung im Bereich von 1720 cm⁻¹.

Eine bevorzugte Ausführungsform des erfindungsgemäßen Verfahrens sieh vor, dass der mindestens eine substituierte Zucker mindestens 3, bevorzugt mindestens 4 freie OH-Gruppen aufweisen.

Vorteilhaft ist ebenso, wenn der mindestens eine substituierte Zucker mono- oder disubstituiert ist. Ganz besonders bevorzugt sind monosubstituierte Verbindungen.

Gemäß einer weiteren bevorzugten Ausführungsform weist das Alditol, von dem sich die substituierten Zucker ableiten die Summenformel

HOCH₂[CH(OH)]ₙCH₂OH,

R₁-OCH₂[CH(OH)]ₙCH₂OH, oder

HOCH₂[CH(OH)]ₙ[CH(OR₁)]CH₂OH

mit n = 2-6, bevorzugt n = 3-5 auf, wobei R₁ ein gegebenenfalls substituierter Zuckerrest ist.

Vorzugsweise leitet sich das mindestens eine substituierte Alditol von Alditolen, ausgewählt aus der Gruppe bestehend aus Threit, Erythrit, Galactit, Mannit, Ribit, Sorbit, Xylit, Arabit, Isomalt, Lactit, Maltit Maltotritol und hydrierte Oligo- und Polysaccharide mit Polyol-Endgruppen und Mischungen hiervon, ab. Besonders bevorzugt ist das mindestens eine bevorzugte Alditol ausgewählt aus der Gruppe bestehend aus Erythrit, Mannit, Isomalt, Maltit und Mischungen hiervon. Ganz besonders bevorzugt ist das mindestens eine Alditol Mannit oder das Cyclitol myo-Inosit.

Beispiele für Heptitole und Octitole als Ausgangsprodukte für die substituierten Derivate sind: meso-glycero-allo-Heptitol, D-glycero-D-altro-Heptitol, D-glycero-D-manno-Heptitol , meso-glycero-gulo-Heptitol, D-glycero-D-galacto-Heptitol (Perseitol), D-glycero-D-gluco-Heptitol, L-glycero-D-gluco Heptitol, D-erythro-L-galacto-Octitol, D-threo-L-galacto-Octitol

Alternativ oder zusätzlich zu den zuvor genannten Alditolen als Ausgangsstoffe für die Herstellung der substituierten Zucker können beim erfindungsgemäßen Verfahren (bzw. für die Zwecke der erfindungsgemäßen Kunststoffzusammensetzung, der Formmasse bzw. dem Formteil oder der Stabilisator-Zusammensetzung) auch Cyclitole, d. h. ringförmige Polyole, verwendet werden.

Weiter vorteilhaft ist das mindestens eine Cyclitol Ausgangsstoff für die Herstellung der substituierten Zucker ausgewählt aus der Gruppe bestehend aus Inositol, Quercitol, Viscumitol, Bornesitol, Conduritol, Ononitol, Pinitol, Pinpollitol, Ciceritol, Quebrachitol, Chinasäure, Shikimisäure und Valienol wobei das mindestens eine Cyclitol vorzugsweise myo-Inosit ist.

Weiter vorteilhaft ist der mindestens eine Ester der Zuckersäure eine Aldonsäure oder eine Aldarsäure. Ausgangsstoffe für die Herstellung der substituierten Zuckersäuren sind beispielsweise die Aldonsäuren Allonsäure, Altronsäure, cluconsäure, Mannonsäure, Gulonsäure, Idonsäure, Galaktonsäure, Talonsäure, Ribonsäure, Arabonsäure, Xylonsäure, Lyxonsäure, Erythronsäure oder Threonsäure. Beispiele für bevorzugte Aldarsäuren sind Schleimsäure oder Glucarsäure.

Weiter vorteilhaft ist das mindestens eine substituierte Amin oder Amid ein Aminozucker. Ausgangsstoffe für die Herstellung der substituierten Aminozucker sind beispielsweise 1-Amino-1-deoxy-alditole, wie z.B. 1-Amino-1-de-oxy-galactit, 1-Amino-1-deoxy-mannit, 1-Amino-1-deoxy-sorbit, 1-Amino-1-deoxy-maltit. Beispiele für disubstituierte Aminozucker leiten sich z.B. von alpha-omega-Diamino-alpha-omega-dideoxyalditolen ab, ein Beispiel ist das 1,6-Diamino-1,6-dideoxysorbit.

Bevorzugte Substituenten sind lineare oder verzweigte Kohlenwasserstoffketten mit midestens 6 CH₂-Gruppen, wie z.B. Hexyl, Heptyl, Octyl, Nonyl, Decyl, Isodecyl, Lauryl, Stearyl, Myristyl, Oleyl, Cetyl, Ceryl, Myricyl, Palmitoleyl, Arachidyl, Behenyl, Erucyl, Lignoceryl, Montanyl, Linoleyl, Isotridecyl

Insbesondere ist der mindestens eine substituierte Zucker ausgewählt ist aus der Gruppe bestehend aus den nachfolgenden Verbindungen: 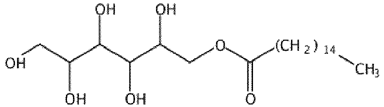 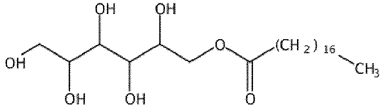 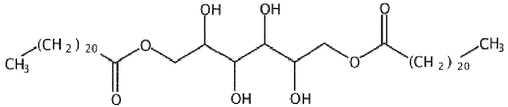 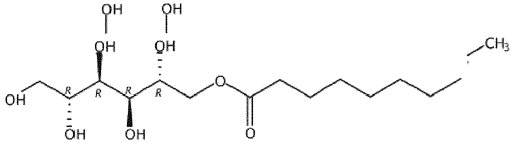 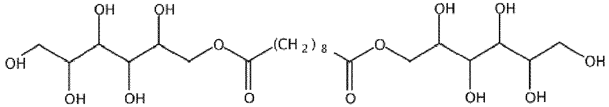 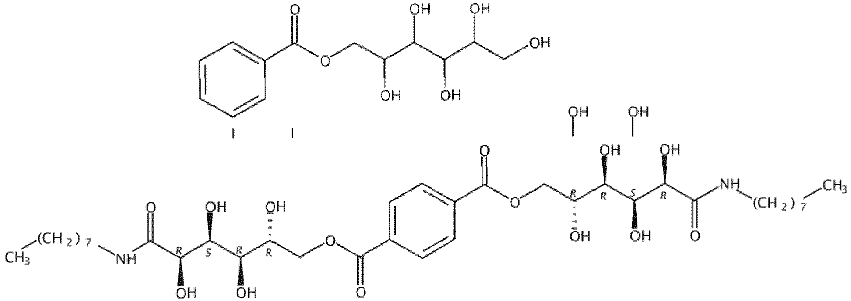 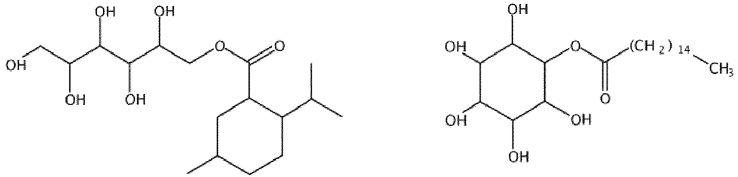 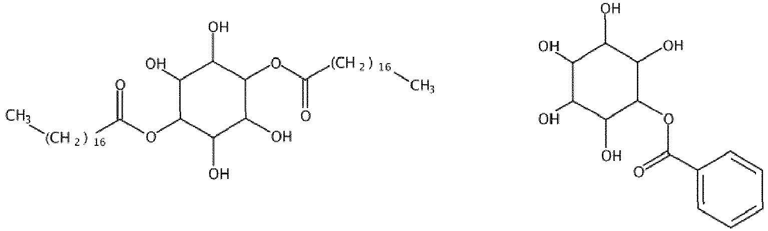 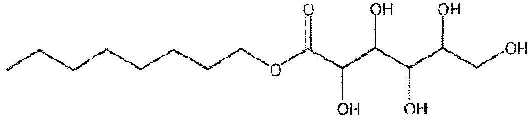 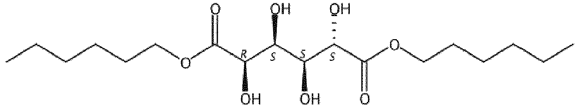 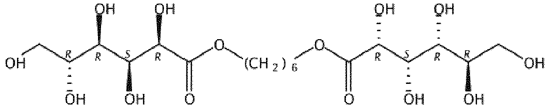 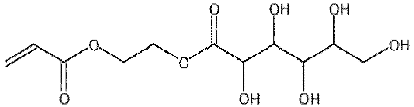 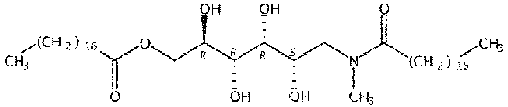 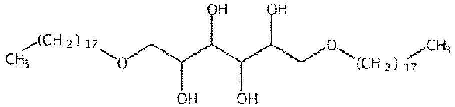 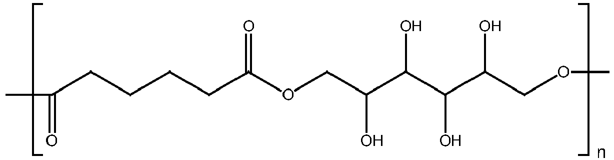 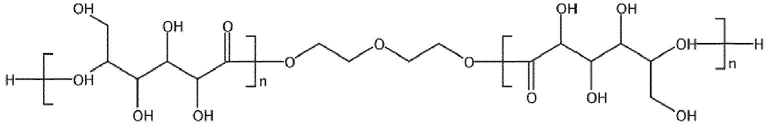 wobei n bei jedem Auftreten gleich oder verschieden ist und eine ganze Zahl zwischen 1 und 100, bevorzugt 2-50, ganz besonders bevorzugt 3-20 ist.

Insbesondere wird bezogen auf 95,0 bis 99,99 Gew.-Teile bevorzugt 99,0 bis 99,98 Gew.-Teile des thermoplastischen Kunststoff-Rezyklats 0,01 bis 5,0 Gew.-Teile, bevorzugt 0,02 bis 1,0 Gew.-Teile des mindestens einen substituierten Zuckers (Komponente (A)) eingebracht.

Eine bevorzugte Ausführungsform des Verfahrens sieht vor, zusätzlich zum mindestens einen substituierten Zucker mindestens ein primäres Antioxidans und/oder mindestens ein sekundäres Antioxidans (Komponente (B)) in das thermoplastische Kunststoff-Rezyklat eingebracht wird/werden. Die Komponenten (A) und (B) können dabei einzeln bzw. getrennt voneinander in das Kunststoff-Rezyklat eingebracht werden oder die Komponenten (A) und (B) können zusammen in Form einer die Komponenten (A) und (B) enthaltenden Zusammensetzung bzw. in Form einer aus den Komponenten (A) und (B) bestehenden Zusammensetzung in das Kunststoff-Rezyklat eingebracht werden.

Als Komponente (B) wird
- mindestens ein primäres Antioxidans (Komponente (B1)), oder
- mindestens ein sekundäres Antioxidans (Komponente (B2)), oder
- mindestens ein primäres Antioxidans und mindestens ein sekundäres Antioxidans verwendet.

Für den Fall, dass mindestens ein primäres Antioxidans und mindestens ein sekundäres Antioxidans verwendet werden, können auch diese einzeln bzw. getrennt voneinander oder zusammen in Form einer Mischung in das Kunststoff-Rezyklat eingebracht werden.

Die erfindungsgemäß eingesetzte Komponente (A) sowie ggf. die zusätzlich zur Komponente (A) eingesetzte Komponente (B) wirkt bzw. wirken zusammen als Stabilisator für das thermoplastische Kunststoff-Rezyklat, wobei der oxidative, thermische und/oder aktinische Abbau des thermoplastischen Kunststoff-Rezyklats gehemmt bzw. verhindert wird. Mit anderen Worten wird durch das Einbringen der Komponente (A) sowie ggf. zusätzlich der Komponente (B) in das thermoplastische Kunststoff-Rezyklat der Kunststoff gegen oxidativen, thermischen und/oder aktinischen Abbau stabilisiert.

Die vorliegende Erfindung zeichnet sich dabei besonders dadurch aus, dass der mindestens eine substituierte Zucker alleine oder zusammen mit primären und/oder sekundären Antioxidantien zur Stabilisierung von thermoplastischen Kunststoff-Rezyklaten eingesetzt werden.

Erfindungsgemäß wurde dabei überraschend festgestellt, dass durch das Einbringen von mindestens einem substituiertem Zucker allein sowie zusammen mit mindestens einem primären und/oder mindestens einem sekundären Antioxidans eine sehr wirkungsvolle Stabilisierung von thermoplastischen Kunststoff-Rezyklaten gegen oxidativen, thermischen und/oder aktinischen Abbau erreicht werden kann. Zudem handelt es sich bei substituierten Zuckern um sehr umweltfreundliche und kostengünstige Verbindungen. Somit können mit dem erfindungsgemäßen Verfahren thermoplastische Kunststoff-Rezyklate auf sehr wirkungsvolle, umweltfreundliche und kostengünstige Weise gegen oxidativen, thermischen und/oder aktinischen Abbau stabilisiert werden.

Die Erfinder vermuten dabei, dass die in das Kunststoff-Rezyklat eingearbeiteten substituierten Zucker hierbei mit den bereits vorhandenen Schädigungsstellen (in der Regel Carbonylgruppen) zu Halb- oder Vollacetalen bei Verarbeitung der Neukompoundierung reagieren können. Somit werden die Schädigungsstellen im Kunststoff effektiv maskiert und stehen als Initiatorstellen für einen weiteren Abbau nicht mehr zur Verfügung. Mit der erfindungsgemäßen Methode bzw. mit den erfindungsgemäßen Additivzusammensetzungen lassen sich somit Schädigungsstellen in Kunststoffrezyklaten beheben. Des weiteren wir vermutet, dass die erfindungsgemäßen substituieretn Zucker als Hydroperoxidzersetzer und/oder als Metalldesaktivatoren wirken können.

Aus diesem Grund ist auch der Zusatz eines substituierten Zuckers zu einem Kunststoff-Rezyklat allein ein wirksamer Stabilisator, da häufig davon auszugehen ist, dass im Rezyklat aus der ersten Anwendung vorhandene primäre und sekundäre Antioxidantien nicht vollständig während des Einsatzes verbraucht wurden.

Das im erfindungsgemäßen Verfahren eingesetzte e thermoplastische Kunststoff-Rezyklat ist vorzugsweise ein Polyolefin-Rezyklat, z.B. ein Polypropylen-Rezyklat oder ein Polyethylen-Rezyklat.

Das erfindungsgemäße Verfahren ist weiterhin besonders geeignet vorgeschädigte Rezyklate zu stabilisieren, insbes. Pololefin-Rezyklate deren Carbonylgruppengehalt, bestimmt durch Absorption im Infrarotspektrum, mindestens 0.01 mol/kg beträgt, bevorzugt größer als 0.02 mol/kg und besonders bevorzugt größer als 0.05 mol/kg ist.

In einer bevorzugten Variante des erfindungsgemäßen Verfahrens ist das mindestens eine primäre Antioxidans ausgewählt aus der Gruppe bestehend aus phenolischen Antioxidantien, Aminen, Lactonen und Mischungen hiervon.

Als phenolische Antioxidantien können beispielsweise verwendet werden:
Alkylierte Monophenole, wie z.B. 2,6-Di-tert-butyl-4-methylphenol, *2-tert-*Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Dicyclopentyl-4-methylphenol, 2-(α-Methylcyclohexyl)-4,6-dimethylphenol, 2,6-Dioctadecyl-4-methylphenol, 2,4,6-Tricyclohexylphenol, 2,6-Di-tert-butyl-4-methoxymethyl-phenol, lineare oder verzweigte Nonylphenole, wie z.B. 2,6-Dinonyl-4-methylphenol, 2,4-Dimethyl-6-(1'-methylundec-1'-yl)phenol, 2,4-Dimethyl-6-(1'-methylheptadec-1'-yl)phenol, 2,4-Dimethyl-6-(1'-methyltridec-1'-yl)phenol und Mischungen hiervon;
Alkylthiomethylphenole, wie z.B. 2,4-Dioctylthiomethyl-6-tert-butylphenol, 2,4-Dioctylthiomethyl-6-methylphenol, 2,4-Dioctylthiomethyl-6-ethylphenol, 2,6-Didodecylthiomethyl-4-nonylphenol;
Hydrochinone und alkylierte Hydrochinone, wie z.B. 2,6-Di-*tert*-butyl-4-methyoxyphenol, 2,5-Di-*tert*-butylhydrochinon, 2,5-Di-*tert*-amylhydrochinon, 2,6-Diphenyl-4-octadecyloxyphenol, 2,6-Di-*tert*-butylhydrochinon, 2,5-Di-*tert-*butyl-4-hydroxyanisol, 3,5-Di-*tert*-butyl-4-hydroxyanisol, 3,5-Di-*tert*-butyl-4-hydroxyphenylstearat, Bis(3,5-di-*tert*-butyl-4-hydroxylphenyl)adipat;
Tocopherole, wie z.B. α-, β-, γ-, δ-Tocopherol und Mischungen aus diesen (Vitamin E);
Hydroxylierte Thiodiphenylether, wie z.B. 2,2'-Thiobis(6-*tert*-butyl-4-methylphenol), 2,2'-Thiobis(4-octylphenol), 4,4'-Thiobis(6-*tert*-butyl-3-methylphenol), 4,4'-Thiobis(6-*tert*-butyl-2-methylphenol), 4,4'-Thiobis(3,6-di-*sec-*amylphenol), 4,4'-Bis(2,6-dimethyl-4-hydroxyphenyl)disulfid;
Alkylidenbisphenole, wie z.B. 2,2'Methylenbis(6-*tert*-butyl-4-methylphenol), 2,2'-Methylenbis(6-*tert*-butyl-4-ethylphenol), 2,2'-Methylenbis[4-methyl-6-(α-methylcyclohexyl)phenol], 2,2'-Methylenbis(4-methyl-6-cyclhexylphenol), 2,2'-Methylenbis(6-nonyl-4-methylphenol), 2,2'-Methylenbis(4,6-di-*tert*-butylphenol), 2,2'-Ethylidenbis(4,6-di-*tert*-butylphenol), 2,2'-Ethylidenbis(6-*tert-*butyl-4-isobutylphenol), 2,2'-Methylenbis[6-(α-methylbenzyl)-4-nonylphenol], 2,2'-Methylenbis[6-(α,α-dimethylbenzyl)-4-nonylphenol], 4,4'-Methylenbis-(2,6-di-*tert*-butylphenol, 4,4'-Methylenbis(6-*tert*-butyl-2-methylphenol), 1,1-bis(5-*tert*-butyl-4-hydroxy-2-methylphenyl)butan, 2,6-Bis(3-*tert*-butyl-5-methyl-2-hydroxybenzyl)-4-methylphenol, 1,1,3-Tris(5-*tert*-butyl-4-hydroxy-2-methylphenyl)butan, 1,1-bis(5-*tert*-butyl-4-hydroxy-2-methylphenyl)-3-n-do-decylmercaptobutan, Ethylenglycol-bis[3,3-bis(3'-*tert*-butyl-4'-hydroxy-phenyl)butyrat], Bis(3-*tert*-butyl-4-hydroxy-5-methylphenyl)dicyclopentadien, Bis[2-(3'-*tert*-butyl-2'-hydroxy-5'-methylbenzyl)-6-*tert*-butyl-4-methylphenyl]-terephthalat, 1,1-Bis-(3,5-dimethyl-2-hydroxyphenyl)butan, 2,2-Bis(3,5-di-*tert-*butyl-4-hydroxyphenyl)propan, 2,2-Bis-(5-*tert*-butyl-4-hydroxy-2-methylphenyl)-4-n-dodecylmercaptobutan, 1,1,5,5-Tetra(5-*tert*-butyl-4-hydroxy-2-methylphenyl)pentan;
O-, N- und S-Benzyl-Verbindungen, wie z.B. 3,5,3',5'-Tetra-*tert*-butyl-4,4'-dihydroxydibenzylether, Octadecyl-4-hydroxy-3,5-dimethylbenzylmercapto-acetat, Tridecyl-4-hydroxy-3,5-di-*tert*-butylbenzylmercaptoacetat, Tris(3,5-di-*tert*-butyl-4-hydroxybenzyl)amin, , Bis(4-*tert*-butyl-3-hydroxy-2,6-dimethylbenzyl)dithioterephthalat, Bis(3,5-di-*tert*-butyl-4-hydroxybenzyl)sulfid, Isooctyl-3,5-di-*tert*-butyl-4-hydroxybenzylmercaptoacetat;
Hydroxybenzylierte Malonate, wie z.B. Dioctadecyl-2,2-bis(3,5-di-*tert*-butyl-2-hydroxybenzyl)malonat, Dioctadecyl-2-(3-*tert*-butyl-4-hydroxy-5-methylbenzyl)malonat, Didodecylmercaptoethyl-2,2-bis(3,5-di-*tert*-butyl-4-hydroxybenzyl)malonat, Bis[4-(1,1,3,3-tetramethylbutyl)phenyl]-2,2-bis(3,5-di-*tert-*butyl-4-hydroxybenzyl)malonat;
Aromatische Hydroxybenzylverbindungen, wie z.B. 1,3,5-Tris(3,5-di-*tert*-butyl-4-hydroxybenzyl)-2,4,6-trimethylbenzol, 1,4-Bis(3,5-di-*tert*-butyl-4-hydroxybenzyl)-2,3,5,6-tetramethylbenzol, 2,4,6-Tris(3,5-di-*tert*-butyl-4-hydroxybenzyl)phenol;
Triazinverbindungen, wie z.B. 2,4-Bis(octylmercapto)-6-(3,5-di-*tert*-butyl-4-hydroxyanilino)-1,3,5-triazin, 2-Octylmercapto-4,6-bis(3,5-di-*tert*-butyl-4-hydroxyanilino)-1,3,5-triazin, 2-Octylmercapto-4,6-bis(3,5-di-*tert*-butyl-4-hydroxyphenoxy)-1,3,5-triazin, 2,4,6-Tris(3,5-di-*tert*-butyl-4-hydroxyphenoxy)-1,2,3-triazin, 1,3,5-Tris(3,5-di-*tert*-butyl-4-hydroxybenzyl)isocyanurat, 1,3,5-Tris(4-*tert*-butyl-3-hydroxy-2,6-dimethylbenzyl)isocyanurat, 2,4,6-Tris(3,5-di-*tert*-butyl-4-hydroxphenylethyl)-1,3,5-triazin, 1,3,5-Tris(3,5-di-*tert*-butyl-4-hydroyphenylpropionyl)hexahydro-1,3,5-triazin, 1,3,5-Tris(3,5-dicyclohexyl-4-hydroxybenzyl)isocyanurat;
Benzylphosphonate, wie z.B. Dimethyl-2,5-di-*tert*-butyl-4-hydroxybenzyl-phosphonat, Dietyhl-3,5-di-*tert*-butyl-4-hydroxybenzylphosphonat, Diocta-decyl-3,5-di-*tert*-butyl-4-hydroxybenzylphosphonat, Dioctadecyl-5-*tert*-butyl-4-hydroxy-3-methylbenzylphosphonat, das Calciumsalz des Monoethylesters der 3,5-Di-*tert*-butyl-4-hydroxybenzylphosphonsäure;
Acylaminophenole, wie z.B. 4-Hydroxylauranilid, 4-Hydroxystearanilid, Octyl-N-(3,5-di-*tert*-butyl-4-hydroxyphenyl)carbamat;
Ester der β-(3,5-Di-*tert*-butyl-4-hydroxyphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-Bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der β-(5-*tert*-Butyl-4-hydroxy-3-methylphenyl)propionsäure mit ein- oder mehrwertigen Alkoholen, z.B. Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan, 3,9-Bis[2-{3-(3-*tert*-butyl-4-hydroxy-5-methylphenyl)propionyloxy}-1,1-dimethylethyl]-2,4,8,10-tetraoxaspiro[5.5]undecan;
Ester der β-(3,5-Dicyclohexyl-4-hydroxyphenyl)propionsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris-(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Ester der (3,5-Di-*tert*-butyl-4-hydroxyphenyl)essigsäure mit ein- oder mehrwertigen Alkoholen, z.B. Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythritol, Tris(hydroxyethyl)isocyanurat, N,N'-bis(hydroxyethyl)oxamid, 3-Thiaundecanol, 3-Thiapentadecanol, Trimethylhexandiol, Trimethylolpropan, 4-Hydroxymethyl-1-phospha-2,6,7-trioxabicyclo[2.2.2]octan;
Amide der β-(3,5-Di-*tert*-butyl-4-hydroxyphenyl)propionsäure, wie z.B. N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hexamethylendiamid, N,N'-Bis(3,5-di-*tert*-butyl-4-hydroxyphenylpropionyl)hydrazid, N,N'-Bis[2-(3-[3,5-di-*tert*-butyl-4-hydroxyphenyl]propionyloxy)ethyl]oxamid (Naugard^{®}XL-1, vertrieben durch Addivant);
Ascorbinsäure (Vitamin C).

Besonders bevorzugte phenolische Antioxidantien sind die folgenden Strukturen: 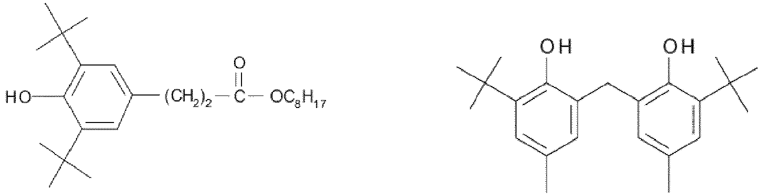 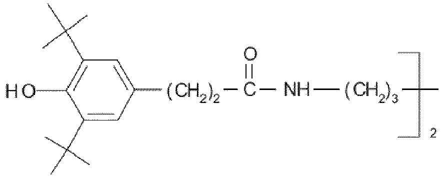 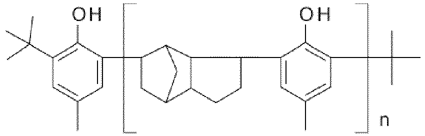 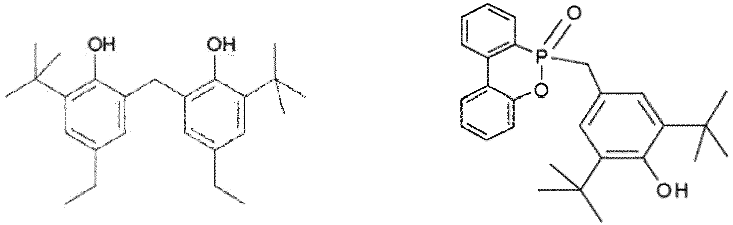 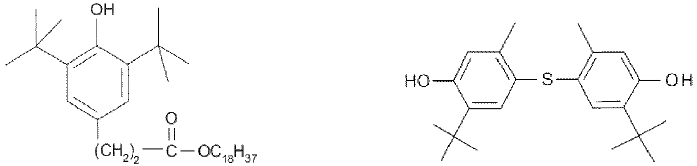 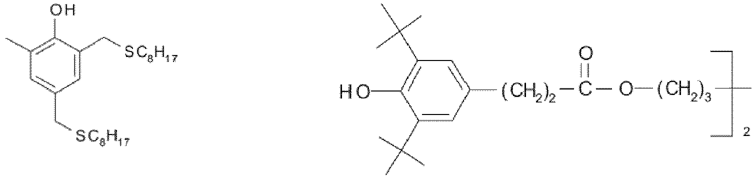 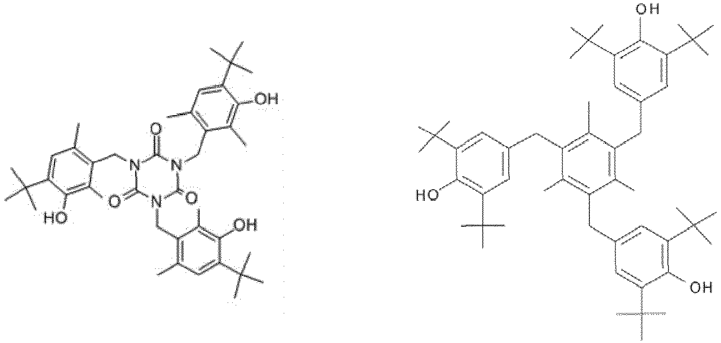 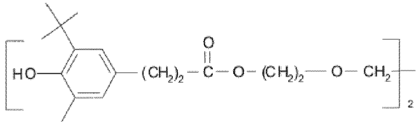 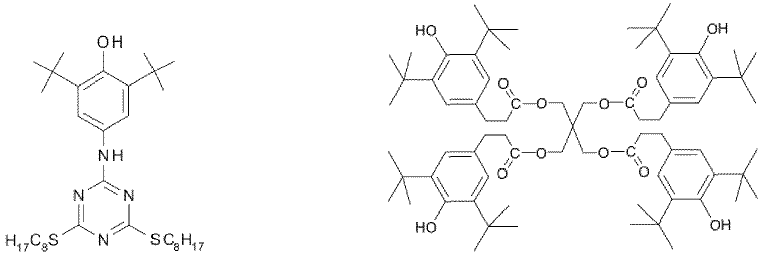 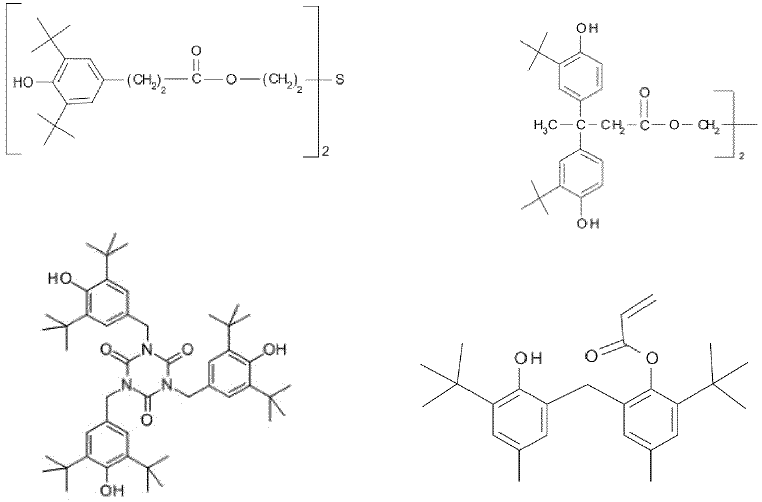 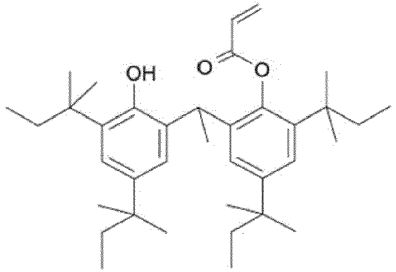 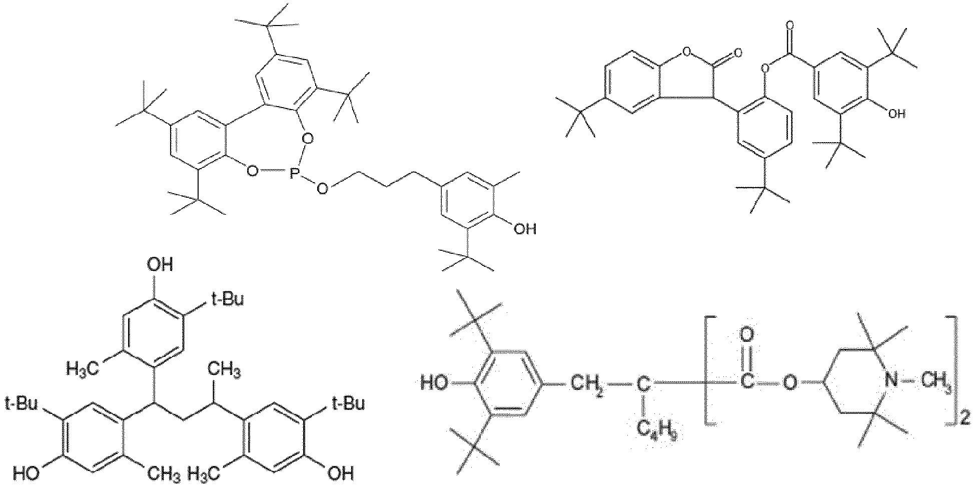 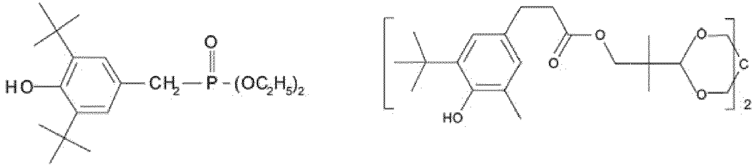 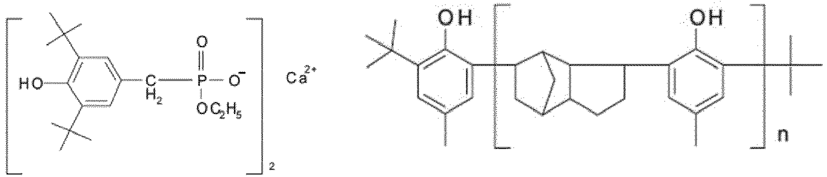 wobei in den zuvor genannten Verbindungen n eine ganze Zahl ist und bei zwischen 2 und 10 liegt

### Ganz besonders bevorzugte phenolische Antioxidantien sind Octadecyl-3-(3,5-di-tert-butyl-4-hydroxyphenyl)propionat und Pentaerythritoltetrakis(3-(3,5-di-tert-butyl-4-hydroxyphenyl)propionat)

Weitere bevorzugte phenolische Antioxidantien sind auf nachwachsenden Rohstoffen basierende phenolische Antioxidantien wie z. B. Tocopherole (Vitamin E), Tocotrienole, Tocomonoenole, Ubichinol, Hydroxytyrosol, Flavonoide and Flavonole wie z.B. Chrysin, Quercitin, Hesperidin, Neohesperidin, Naringin, Morin, Kaempferol, Fisetin, Datiscetin, Luteolin, Apigenin, Taxifolin, Isoflavone wie z.B. Genistein, Genistin, Daidzein, Daidzin, Formononetin, Anthocyane, wie z.B. Delphinidin und Malvidin, Curcumin, Carnosolsäure, Carnosol, Rosmarinsäure, Tannin und Resveratrol sowie Carotenoide mit alkoholischen Gruppen wie z.B. beta-Cryptoxanthin, Lutein, Zeaxanthin oder AStaxanthin
Als aminische Antioxidantien können beispielsweise verwendet werden:
N,N'-Di-isopropyl-p-phenylendiamin, N,N'-Di-*sec*-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin, 4-(p-Toluolsulfamoyl)diphenylamin, N,N'-Dimethyl-N,N'-di-*sec*-butyl-p-phenylendiamin, Diphenylamin, N-Allyldiphenylamin, 4-Isopropoxydiphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylaminophenol, 4-Dodecanoylaminophenol, 4-Octadecanoylamino-phenol, Bis(4-methoxyphenyl)amin, 2,6-Di-tert-butyl-4-dimethylaminomethyl-phenol, 2,4'-Diaminodiphenylmethan, 4,4'-Diaminodiphenylmethan, N,N,N',N'-Tetramethyl-4,4'-diaminodiphenylmethan, 1,2-Bis[(2-methyl-phenyl)amino]ethan, 1,2-Bis(phenylamino)propan, (o-Tolyl)biguanid, Bis[4-(1',3'-dimethylbutyl)-phenyl]amin, *tert*-octyliertes N-Phenyl-1-naphthylamin, ein Gemisch aus mono- und dialkylierten *tert*-Butyl/*tert*-Octyldiphenylaminen, ein Gemisch aus mono- und dialkylierten Nonyldiphenylaminen, ein Gemisch aus mono- und dialkylierten Dodecyldiphenylaminen, ein Gemisch aus mono- und dialkylierten Isopropyl/Isohexyl-diphenylaminen, ein Gemisch aus mono- und dialkylierten *tert*-Butyldiphenylaminen, 2,3-Dihydro-3,3-dimethyl-4H-1,4-benzothiazin, Phenothiazin, ein Gemisch aus mono- und dialkylierten *tert*-Butyl/*tert*-Octylphenothiazinen, ein Gemisch aus mono- und dialkylierten *tert*-Octylphenothiazinen, N-Allylphenothiazin, N,N,N',N'-Tetraphenyl-1,4-diaminobut-2-en sowie Mischungen oder Kombinationen hiervon.

Bevorzugte aminische Antioxidantien sind:
N,N'-Di-isopropyl-p-phenylendiamin, N,N'-Di-*sec*-butyl-p-phenylendiamin, N,N'-Bis(1,4-dimethylpentyl)-p-phenylendiamin, N,N'-Bis(1-ethyl-3-methylpentyl)-p-phenylendiamin, N,N'-Bis(1-methylheptyl)-p-phenylendiamin, N,N'-Dicyclohexyl-p-phenylendiamin, N,N'-Diphenyl-p-phenylendiamin, N,N'-Bis(2-naphthyl)-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin.

Besonders bevorzugte aminische Antioxidantien sind die Strukturen: 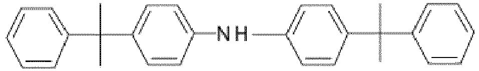 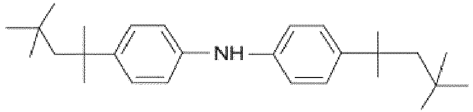 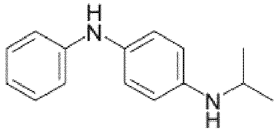 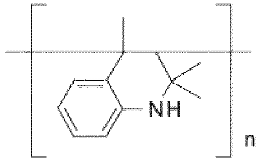 wobei n eine ganze Zahl ist und zwischen 3 und 100 liegt.

Weitere bevorzugte aminische Antioxidantien sind:
Hydroxylamine bzw. N-oxide (Nitrone), wie z.B. N,N-Dialkylhydroxylamine, N,N-Dibenzylhydroxylamin, N,N-Dilaurylhydroxylamin, N,N-Distearyl-hydroxylamin, N-Benzyl-α-phenylnitron, N-Octadecyl-α-hexadecylnitron, sowie Genox EP (vertrieben durch S! Group) gemäß der Formel: 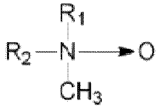 R₁, R₂ = C₁₄-C₂₄ alkyl chains

Bevorzugte Lactone sind:
Benzofuranone und Indolinone wie z.B. 3-(4-(2-acetoxyethoxy)phenyl]-5,7-di-tert-butyl-benzofuran-2-on, 5,7-di-tert-butyl-3-[4-(2-stearoyloxyethoxy)-phenyl]benzofuran-2-on, 3,3'-bis[5,7-di-tert-butyl-3-(4-(2-hydroxyethoxy]-phenyl)benzofuran-2-on), 5,7-di-tert-butyl-3-(4-ethoxyphenyl)benzofuran-2-on, 3-(4-acetoxy-3,5-dimethylphenyl)-5,7-di-tert-butyl-benzofuran-2-on, 3-(3,5-dimethyl-4-pivaloyloxyphenyl )-5,7-di-tert-butyl-benzofuran-2-on, 3-(3,4-dimethylphenyl)-5,7-di-tert-butyl-benzofuran-2-on, 3-(2,3-di methylphenyl)-5,7-di-tert-butyl-benzofuran-2-on, sowie Lactone, die zusätzlich Phosphitgruppen beinhalten wie z.B.

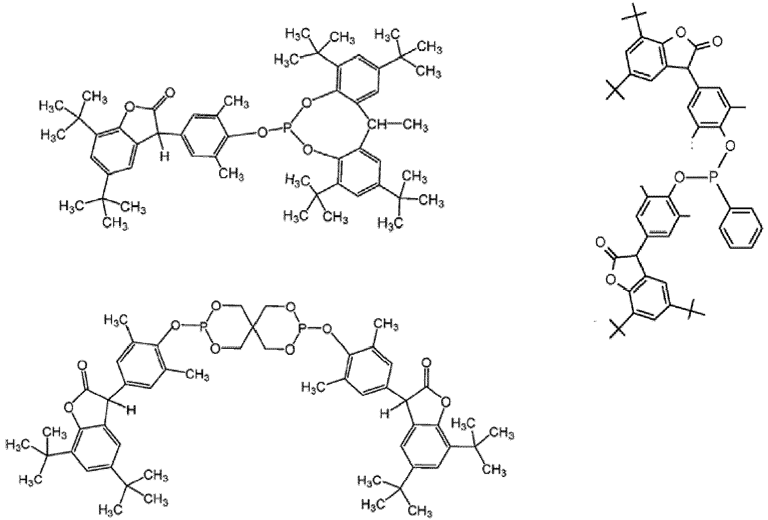

Eine weitere geeignete Gruppe von Antioxidantien sind Isoindolo[2,1-A]chinazoline wie z.B.

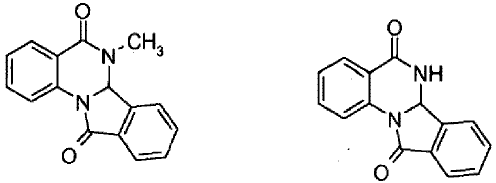

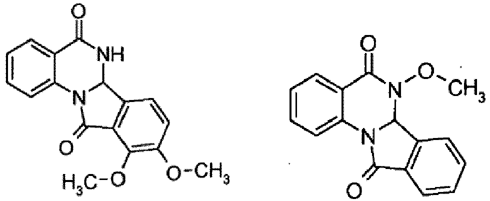

Eine weitere bevorzugte Variante des erfindungsgemäßen Verfahrens zeichnet sich dadurch aus, dass das mindestens eine sekundäre Antioxidans ausgewählt ist aus der Gruppe bestehend aus Phosphorverbindungen, insbesondre Phosphiten und Phosphoniten, Organo-Schwefelverbindungen, insbesondere Sulfiden und Disulfiden, sowie Mischungen hiervon.

Geeignete sekundäre Antioxidantien sind insbesondere Phosphite oder Phosphonite wie z.B. Triphenylphosphit, Diphenylalkylphosphite, Phenyldialkylphosphite, Tri(nonylphenyl)phosphit, Trilaurylphosphite, Trioctadecylphosphit, Distearylpentaerythritoldiphosphit, Tris-(2,4-di-*tert-*butylphenyl)phosphit, Diisodecylpentaerythritoldiphosphit, Bis(2,4-di-*tert-*butylphenyl)pentaerythritoldiphosphit, Bis(2,4-di-cumylphenyl)pentaerythritoldiphosphit, Bis(2,6-di-*tert*-butyl-4-methylphenyl)-pentaerythritoldiphosphit, Diisodecyloxypentaerythritoldiphosphit, Bis(2,4-di-*tert*-butyl-6-methylphenyl)pentaerythritoldiphosphit, Bis(2,4,6-tris(*tert-*butylphenyl)pentaerythritoldiphosphit, Tristearylsorbitoltriphosphit, Tetrakis(2,4-di-*tert*-butylphenyl)-4,4'-biphenylendiphosphonit, 6-Isooctyloxy-2,4,8,10-tetra-*tert-*butyl-12H-dibenz[d,g]-1,3,2-dioxaphosphocin, Bis(2,4-di-*tert*-butyl-6-methylphenyl)methylphosphit, Bis(2,4-di-*tert*-butyl-6-methylphenyl)ethylphosphit, 6-Fluoro-2,4,8,10-tetra-*tert*-butyl-12-methyl-dibenz-[d,g]-1,3,2-dioxaphosphocin, 2,2'2"-Nitrilo[triethyltris(3,3",5,5'-tetra-*tert-*butyl-1,1'-biphenyl-2,2'-diyl)phosphit], 2-Ethylhexyl(3,3',5,5'-tetra-*tert*-butyl-1,1'-biphenyl-2,2'-diyl))phosphit, 5-Butyl-5-ethyl-2-(2,4,6-tri-*tert*-butyl-phenoxy)-1,3,2-dioxaphosphiran.

### Besonders bevorzugte Phosphite/Phosphonite sind:

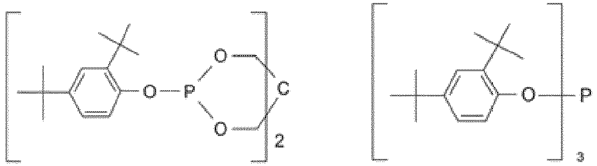

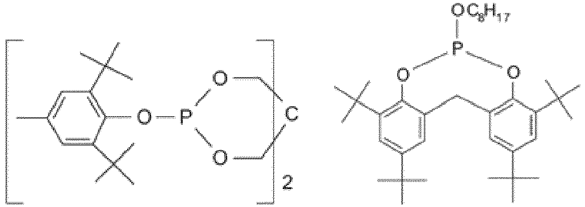

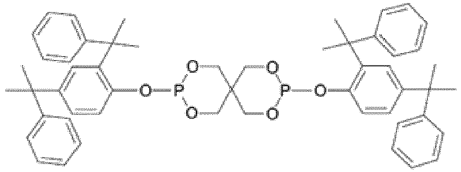

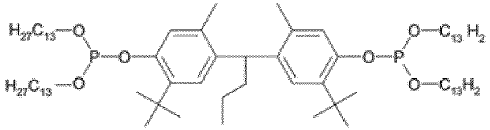

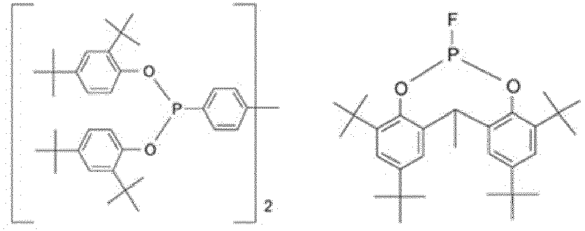

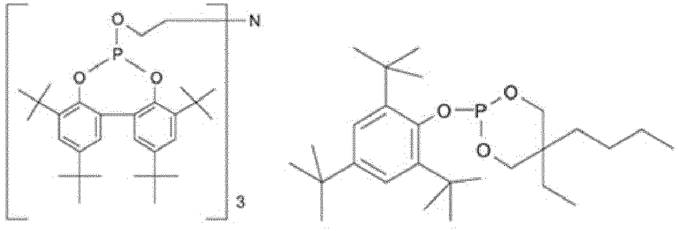

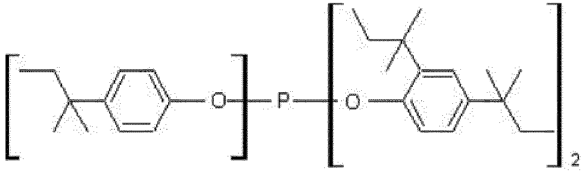

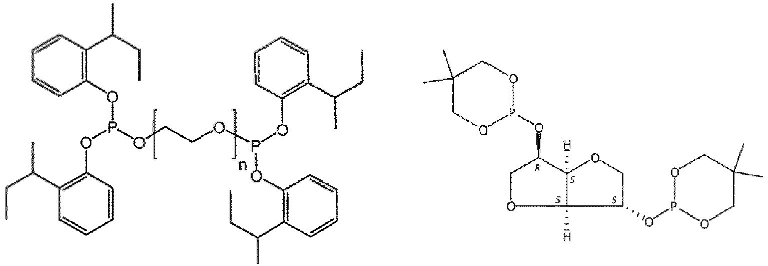

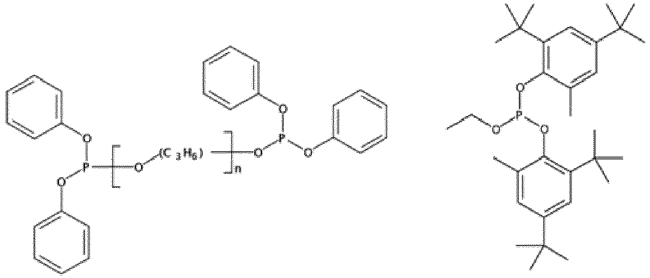

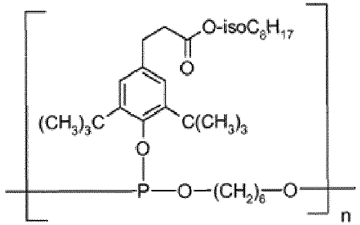

wobei n= 3-100 bedeutet.

Ein bevorzugtes Phosphonit ist:

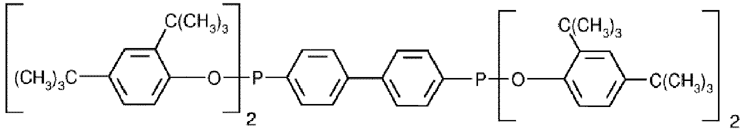

Ganz besonders bevorzugt wird das Phosphit Tris-(2,4-di-*tert-*butylphenyl)phosphit als sekundäres Antioxidans verwendet.

Geeignete sekundäre Antioxidantien sind weiterhin Organo-Schwefelverbindungen wie z.B. Sulfide und Disulfide z.B. Distearylthiodipropionat, Dilaurylthiodipropionat; Ditridecyldithiopropionat, Ditetradecylthiodipropionat, 3-(Dodecylthio)-,1,1'-[2,2-bis[[3-(dodecylthio)-1-oxopropoxy]methyl]-1,3-propandiyl]propansäureester. Bevorzugt sind die folgenden Strukturen:

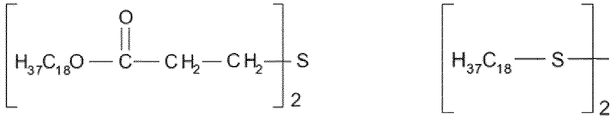

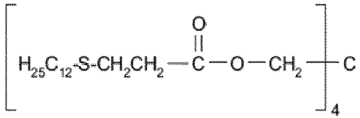

In einer weiterhin bevorzugten Ausführungsform besteht die Komponente (B) sowohl aus einem primären Antioxidans als auch aus einem sekundären Antioxidans. In diesem Fall ist besonders bevorzugt, dass die Komponente (B) aus einem phenolischen Antioxidans und einem Phosphit oder Phosphonit besteht.

In einer weiteren bevorzugten Ausführungsform bestehen die Komponenten (A) und (B) aus einem nachwachsenden Rohstoff.

Eine besonders bevorzugte Variante des erfindungsgemäßen Verfahrens ist dadurch gekennzeichnet, dass mindestens ein primäres Antioxidans und mindestens ein sekundäres Antioxidans in den thermoplastischen Kunststoff eingebracht werden. Dies bedeutet, dass als Komponente (B) mindestens ein primäres Antioxidans und mindestens ein sekundäres Antioxidans verwendet werden. Auf diese Weise kann eine noch wirksamere Stabilisierung des thermoplastischen Kunststoffs gegen oxidativen, thermischen und/oder actinischen Abbau erreicht werden.

In einer weiteren bevorzugten Variante des erfindungsgemäßen Verfahrens werden die Komponente (A) und die Komponente (B) in einem Gewichtsverhältnis von 5:95 bis 95:5, bevorzugt von 10:90 bis 90:10, besonders bevorzugt von 20:80 bis 80:20, in das thermoplastische Kunststoff-Rezyklat eingebracht.

Besteht die Komponente (B) sowohl aus einem primären Antioxidans als auch aus einem sekundären Antioxidans so ist das Verhältnis zwischen primären und sekundären Antioxidans bevorzugt 90:10 bis 10:90, besonders bevorzugt 80:20 bis 20:80 und ganz besonders bevorzugt 70:30 bis 30:70.

Eine weitere bevorzugte Variante des erfindungsgemäßen Verfahrens zeichnet sich dadurch aus, dass die Komponenten (A) und/oder (B) dadurch in das thermoplastische Kunststoff-Rezyklat eingebracht werden, dass
die als Feststoff vorliegenden Komponenten (A) und/oder (B) mit dem als Feststoff vorliegenden thermoplastischen Kunststoff-Rezyklat vermischt werden und die dabei entstehende Mischung geschmolzen und anschließend abgekühlt wird, oder
die als Feststoff vorliegenden Komponenten (A) und/oder (B) geschmolzen und die dabei entstehende Schmelze in eine Schmelze des thermoplastischen Kunststoff-Rezyklat eingebracht wird.

Vorzugsweise werden die Komponenten (A) und/oder (B), die als Pulver, kompaktiert, Granulat, Lösung oder Schuppen vorliegen können, mit dem zu stabilisierenden Polymer gemischt, die Polymermatrix in die Schmelze überführt und anschließend abgekühlt. Alternativ hierzu ist es ebenso möglich, das Additiv in einem schmelzflüssigen Zustand in eine Polymerschmelze einzubringen.

Für den Fall, dass dem thermoplastischen Kunststoff-Rezyklat weitere Bestandteile zugefügt werden, können diese separat, in Form von Flüssigkeiten, Pulvern, Granulaten oder kompaktierten Produkten oder zusammen mit der erfindungsgemäßen Additivzusammensetzung wie zuvor beschrieben den Polymeren zugesetzt werden.

Vorzugsweise kann in das thermoplastische Kunststoff-Rezyklat zusätzlich mindestens ein Zusatzstoff eingebracht werden, welcher ausgewählt ist aus der Gruppe bestehend aus UV-Absorbern, Lichtstabilisatoren, Metalldesaktivatoren, Füllstoffdesaktivatoren, Antiozonantien, Nukleierungsmitteln, Antinukleierungsmitteln, Schlagzähigkeitsverbesserern, Weichmachern, Gleitmitteln, Rheologiemodifikatoren, Thixotropiemitteln, Kettenverlängerern, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobisierungsmitteln, Haftvermittlern, Dipergiermitteln, Kompatibilisatoren, Sauerstofffängern, Säurefängern, Treibmitteln, Abbau-Additiven, Entschäumungsmitteln, Geruchsfängern, Markierungsmitteln, Antifoggingmitteln, Füllstoffen, Verstärkungsstoffen und Mischungen hiervon.

Weiterhin ist es bevorzugt, dass in das thermoplastische Kunststoff-Rezyklat zusätzlich mindestens einen Zusatzstoff eingebracht wird, welcher ausgewählt ist aus der Gruppe bestehend aus
a) Säurefängern, Lichtstabilisatoren, vorzugsweise Lichtstabilisatoren aus der Gruppe der gehinderten Amine,
b) Dispergiermitteln,
c) Füllstoffdesaktivatoren, und
Mischungen hiervon.

Geeignete Säurefänger ("Antiacids") sind Salze von ein, zwei, drei oder vierwertigen Metallen, vorzugsweise Alkali-, Erdalkalimetalle, Aluminium oder Zink, insbesondere gebildet mit Fettsäuren, wie z.B. Calciumstearat, Magnesiumstearat, Zinkstearat, Aluminiumstearat, Calciumlaurat, Calciumbehenat, Calciumlactat, Calciumstearoyl-2-lactat. Weitere Klassen geeigneter Säurefänger sind Hydrotalcite, insbesondere synthetische Hydrotalcite auf Aluminium-, Magnesium- und Zinkbasis, Hydrocalumite, Zeolithe, Erdalkalioxide, insbesondere Calciumoxid und Magnesiumoxid sowie Zinkoxid, Erdalkalicarbonate, insbesondere Calciumcarbonat, Magnesiumcarbonat und Dolomit sowie Hydroxide, insbesondere Brucit (Magnesiumhydroxid),

Geeignete Lichtstabilisatoren sind beispielsweise Verbindungen auf der Basis von 2-(2'-Hydroxyphenyl)benzotriazolen, 2-Hydroxybenzophenonen, Estern von Benzoesäuren, Acrylaten, Oxamiden und 2-(2-Hydroxyphenyl)-1,3,5-Triazinen.

Geeignete 2-(2'-Hydroxyphenyl)benzotriazole sind beispielsweise 2-(2'-Hydroxy-5'methylphenyl)benzotriazol, 2-(3',5'-Di-*tert*-butyl-2'-hydroxyphenyl)benzotriazol, 2-(5'-*tert*-Butyl-2'-hydroxy-phenyl)benzotriazol, 2-(2'-Hydroxy-5'-(1,1,3,3-tetramethylbutyl)phenyl)benzotriazol, 2-(3',5'-Di-*tert-*butyl-2'-hydroxyphenyl)-5-chlorbenzotriazol, 2-(3'-*tert*-Butyl-2'-hydroxy-5'-methylphenyl-5-chlorbenzotriazol, 2-(3'-sec-Butyl-5'-*tert*-butyl-2'-hydroxyphenyl)benzotriazol, 2-(2'-Hydroxy-4'-octyloxyphenyl)benzotriazol, 2-(3',5'-Di-*tert*-amyl-2'-hydroxyphenyl)benzotriazol, 2-(3',5'-Bis(α,α-dimethylbenzyl)-2'-hydroxyphenyl)benzotriazol, 2-(3'-*tert*-Butyl-2'-hydroxy-5'-(2-octyloxy-carbonylethyl)phenyl)-5-chlorbenzotriazol, 2-(3'-*tert*-Butyl-5'-[2-(2-ethyl-hexyloxy)carbonylethyl]-2'-hydroxyphenyl)-5-chlorbenzotriazol, 2-(3'-*tert-*Butyl-2'-hydroxy-5'-(2-methoxycarbonylethyl)phenyl)-5-chlorbenzotriazol, 2-(3'-*tert*-Butyl-2'-hydroxy-5'-(2-methoxycarbonylethyl)phenyl)benzotriazol, 2-(3'-*tert*-Butyl-2'-hydroxy-5'-(2-octyloxycarbonylethyl)phenyl)benzotriazol, 2-(3'-*tert*-Butyl-5'-[2-(2-ethylhexyloxy)carbonylethyl]-2'-hydroxyphenyl)benzotriazol, 2-(3'-Dodecyl-2'-hydroxy-5'-methylphenyl)benzotriazol, 2-(3'-*tert-*Butyl-2'-hydroxy-5'-(2-isooctyloxycarbonylethyl)phenylbenzotriazol, 2,2'-Methylenbis[4-(1,1,3,3-tetramethylbutyl)-6-benzotriazol-2-ylphenol]; das Produkt der Umesterung von 2-[3'-*tert*-Butyl-5'-(2-methoxycarbonylethyl)-2'-hydroxyphenyl]-2H-benzotriazol mit Polyethylenglycol 300; [R-CH₂CH₂-COO-CH₂CH₂⁆-₂, wobei R = 3'-*tert*-Butyl-4'-hydroxy-5'-2H-benzotriazol-2-ylphenyl, 2-[2'-Hydroxy-3'-(α,α-dimethylbenzyl)-5'-(1,1,3,3-tetramethylbutyl)-phenyl]benzotriazol, 2-[2'-hydroxy-3'-(1,1,3,3-tetramethylbutyl)-5'-(α,α-dimethylbenzyl)phenyl]benzotriazol.

Geeignete 2-Hydroxybenzophenone sind beispielsweise 4-Hydroxy-, 4-Methoxy-, 4-Octyloxy-, 4-Decyloxy- 4-Dodecyloxy, 4-Benzyloxy, 4,2',4'-Trihydroxy- und 2'-Hydroxy-4,4'-dimethyoxy-Derivate der 2-Hydroxybenzophenone.

Geeignete Acrylate sind beispielsweise Ethyl-α-cyano-β,β-diphenylacrylat, Isooctyl-α-cyano-β,β-diphenylacrylat, Methyl-α-carbomethoxycinnamat, Methyl-α-cyano-β-methyl-p-methoxycinnamat, Butyl-α-cyano-β-methyl-p-methoxycinnamat, Methyl-α-carbomethoxy-p-methoxycinnamat und N-(β-carbomethoxy-β-cyanovinyl)-2-methylindolin.

Geeignete Ester von Benzoesäuren sind beispielsweise 4-*tert*-Butylphenylsalicylat, Phenylsalicylat, Octylphenylsalicylat, Dibenzoylresorcinol, Bis(4-*tert-*butylbenzoyl)resorcinol, Benzoylresorcinol, 2,4-Di-tert-butylphenyl-3,5-di-*tert-*butyl-4-hydroxybenzoat, Hexadecyl-3,5-di-*tert*-butyl-4-hydroxybenzoat, Octadecyl-3,5-di-*tert*-butyl-4-hydroxybenzoat, 2-Methyl-4,6-di-*tert*-butylphenyl-3,5-di-*tert*-butyl-4-hydroxybenzoat.

Geeignete Oxamide sind beispielsweise 4,4'-Dioctyloxyoxanilid, 2,2'-diethoxyoxanilid, 2,2'-Dioctyloxy-5,5'-di-*tert*-butoxanilid, 2,2'-didodecyloxy-5,5'-di-*tert-*butoxanilid, 2-Ethoxy-2'-ethyloxanilid, N,N'-Bis(3-dimethylaminopropyl)-oxamid, 2-Ethoxy-5-*tert*-butyl-2'-ethoxanilid und seine Mischungen mit 2-Ethoxy-2'-ethyl-5,4'-di-*tert*-butoxanilid, Mischungen von o- und p-Methoxydisubstituierten Oxaniliden und Mischungen von o- und p-Ethoxydisubstituierten Oxaniliden.

Geeignete 2-(2-Hydroxyphenyl)-1,3,5-Triazine sind beispielsweise 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxypropoxy)-phenyl]-4,6-bis(2,4-dimethyl)-1,3,5-triazin, 2-[2-Hydroxy-4-(2-hydroxy-3-octyloxy-propyloxy)phenyl]-4,6-bis(2,4-dimethyl)-1,3,5-triazin, 2-[4-(Dodecyloxy/- Tridecyloxy-2-hydroxypropoxy)-2-hydroxyphenyl]-4,6-bis(2,4-dimethylphenyl)-1,3,5-triazin, 2-[2-Hydroxy-4-(2-hydroxy-3-dodecyloxypropoxy)-phenyl]-4,6-bis(2,4-dimethylphenyl-1,3,5-triazin, 2-(2-Hydroxy-4-hexyloxy)-phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxypropoxy)-phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]-phenyl}-4,6-bis(2,4-dimethylphenyl-1,3,5-triazin.

Geeignete Metalldeaktivatoren sind beispielsweise N,N'-Diphenyloxamid, N-Salicylal-N'-salicyloylhydrazin, N,N'-Bis(salicyloyl)hydrazin, N,N'-Bis(3,5-di-tert-butyl-4-hydroxyphenylpropionyl)hydrazin, 3-Salicyloylamino-1,2,4-triazol, Bis(benzyliden)oxalyldihydrazid, Oxanilid, Isophthaloyldihydrazid, Sebacoylbisphenylhydrazid, N,N'-Diacetyladipoyldihydrazid, N,N'-Bis(salicyloyl)oxylyldi-hydrazid, N,N'-Bis(salicyloyl)thiopropionyldihydrazid.

Besonders bevorzugt als Metalldaktivatoren sind:

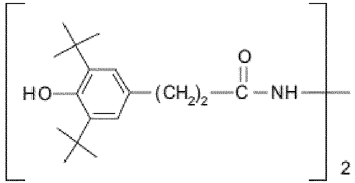

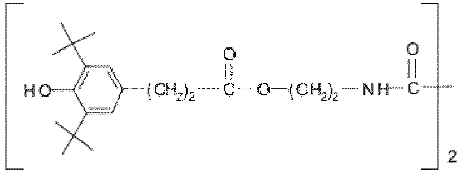

Geeignete gehinderte Amine sind beispielsweise 1,1-Bis(2,2,6,6-tetramethyl-4-piperidyl)succinat, Bis(1,2,2,6,6-pentamethyl-4-piperidyl)sebazat, Bis(1-octyloxy-2,2,6,6-tetramethyl-4-piperidyl)sebazat, Bis(1,2,2,6,6-pentamethyl-4-piperidyl)-n-butyl-3,5-di-tert-butyl-4-hydroxybenzylmalonat, das Kondensationsprodukt aus 1-(2-Hydroxyethyl)-2,2,6,6-tetramethyl-4-hydroxypiperidin und Succinsäure, lineare oder zyklische Kondensationsprodukte von N,N'-Bis(2 ,2,6,6-tetramethyl-4-piperidyl )hexamethylendiamin und 4-*tert*-Octylamino-2,6-di-chloro-1,3,5-triazin, Tris(2 ,2,6,6-tetramethyl-4-piperidyl)nitrilotriacetat, Tetrakis(2 ,2,6,6-tetra-methyl-4-piperidyl)-1,2,3,4-butantetracarboxylat, 1,1'-(1,2-Ethandiyl)-bis(3,3,5,5-tetramethylpiper-azinon), 4-Benzoyl-2,2,6,6-tetramethylpiperidin, 4-Stearyloxy-2,2,6,6-tetramethylpiperidin, lineare oder zyklische Kondensationsprodukte aus N,N'-Bis(2,2,6,6-tetramethyl-4-piperidyl)hexamethylendiamin und 4-Morpholino-2,6-dichloro-1,3,5-triazin das Reaktionsprodukt von 7,7,9,9-Tetramethyl-2-cycloundecyl-1-oxa-3,8-diaza-4-oxospiro-[4,5]decan und Epichlorhydrin.

Umfasst in den oben angegebenen Strukturen sind dabei jeweils auch die sterisch gehinderten N-H, N-alkyl wie N-methyl oder N-octyl, die N-alkoxy-Derivate wie N-methoxy oder N-octyloxy, die Cycloalkylderivate wie N-cyclohexyloxy und die N-(2-hydroxy-2-methylpropoxy) Analoga.

Bevorzugte gehinderte Amine weisen weiterhin die folgenden Strukturen auf:

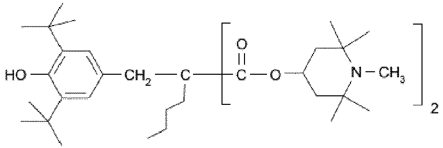

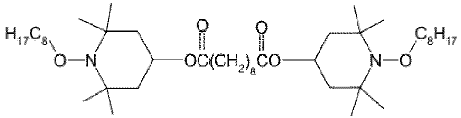

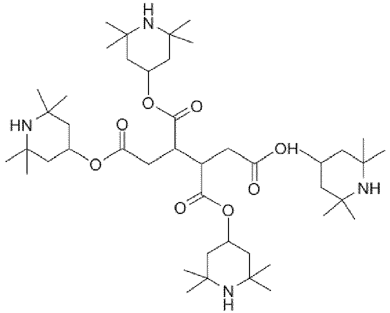

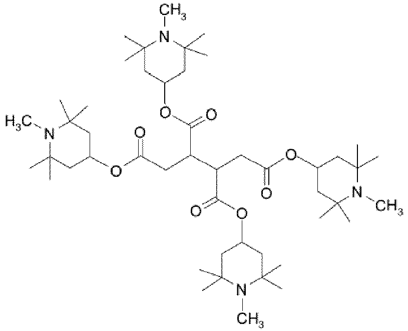

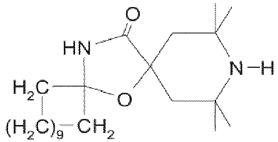

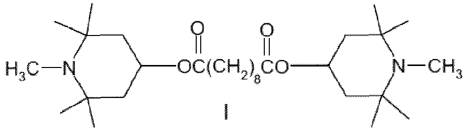

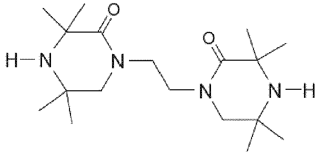

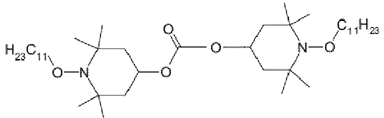

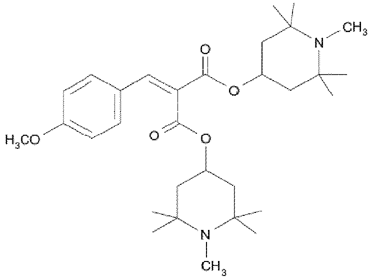

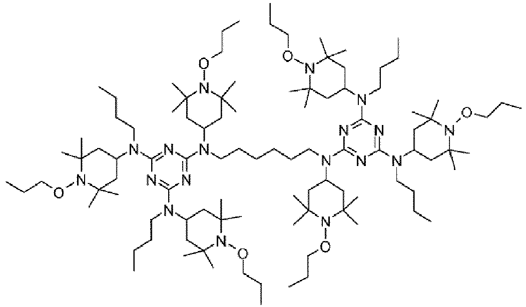

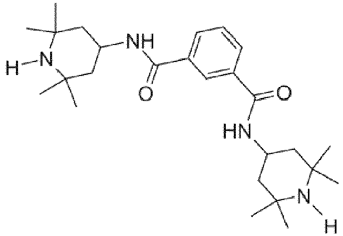

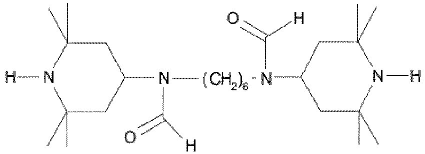

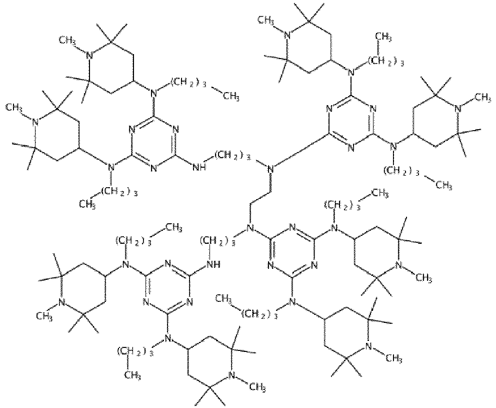

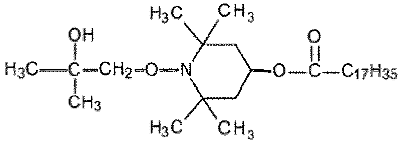

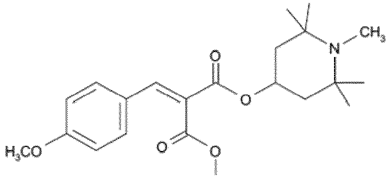

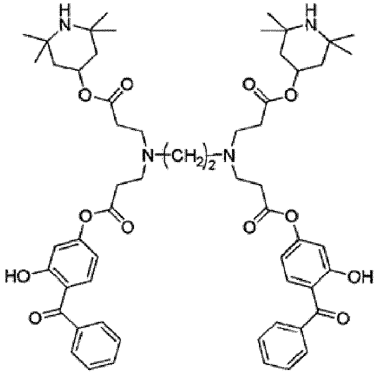

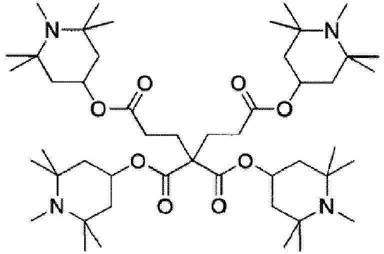

Bevorzugte oligomere und polymere gehinderte Amine weisen die folgenden Strukturen auf:

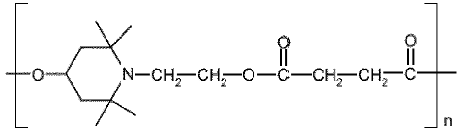

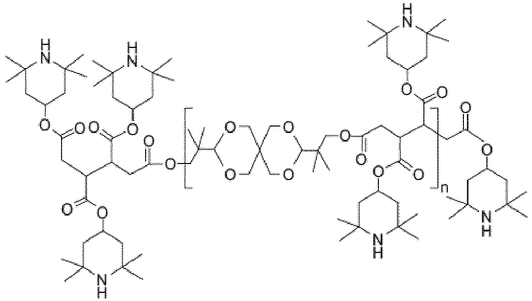

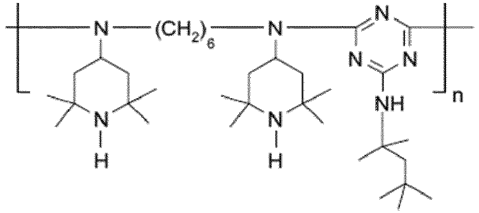

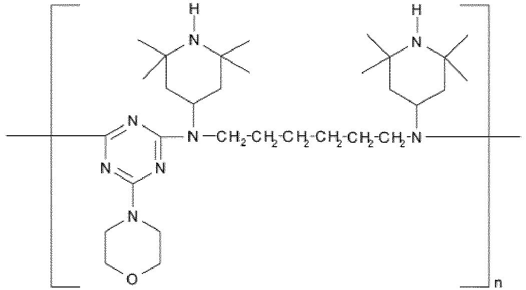

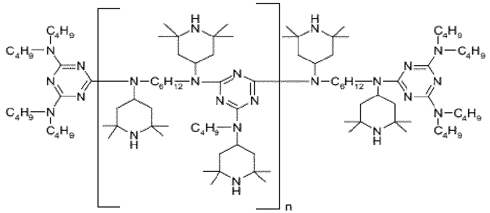

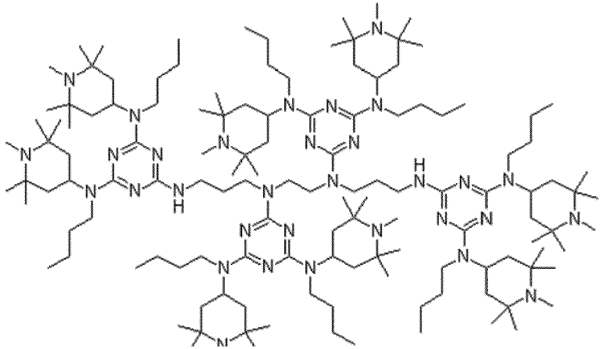

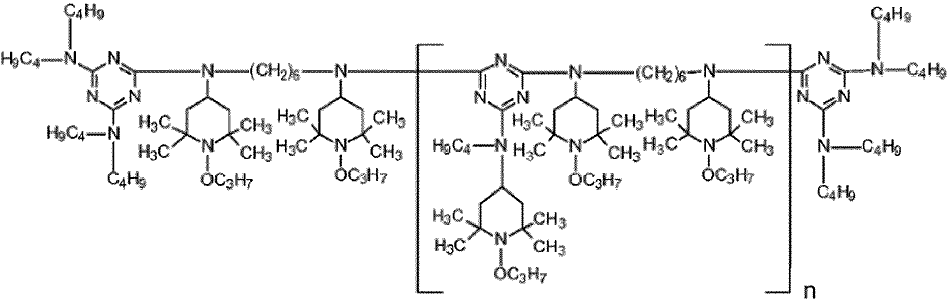

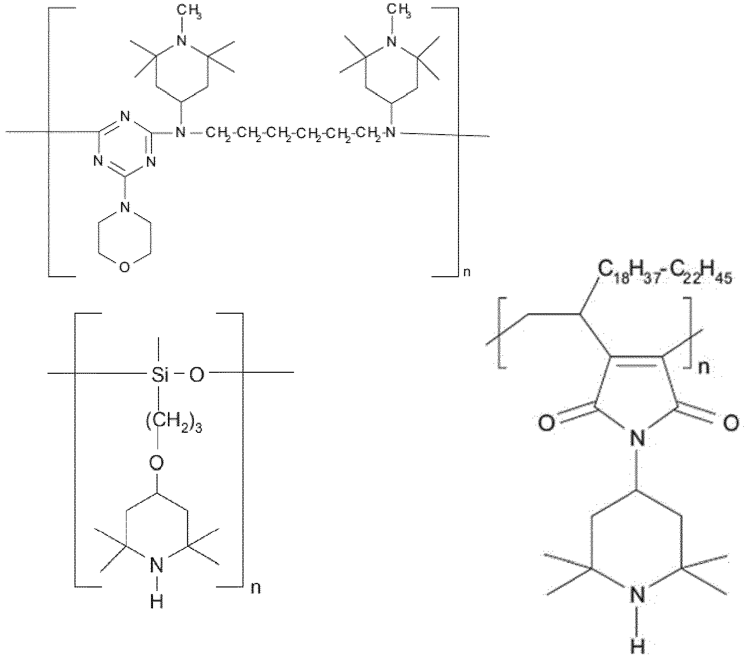

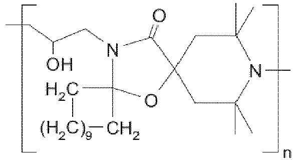

Bei den zuvor genannten Verbindungen bedeutet n jeweils 3 bis 100.

Ein weiterer geeigneter Lichtstabilisator ist Hostanox NOW (Hersteller: Clariant SE) mit der folgenden allgemeinen Struktur:

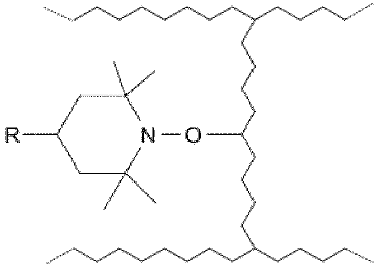

Geeignete Dispergiermittel sind beispielsweise:
Polyacrylate, z.B. Copolymere mit langkettigen Seitengruppen, Polyacrylat-Blockcopolymere, Alkylamide: z.B. N,N'-1,2-Ethandiylbisoctadecanamid Sorbitanester, z.B. Monostearylsorbitanester, Titanate und Zirconate, reaktive Copolymere mit funktionellen Gruppen z. B. Polypropylen-co-Acrylsäure, Polypropylen-co-Maleinsäureanhydrid, Polyethylen-co-Glycidylmethacrylat, Polystyrol-alt-Maleinsäureanhydrid-Polysiloxane: z.B. Dimethylsilandiol-Ethylenoxid Copolymer, Polyphenylsiloxan Copolymer, Amphiphile Copolymere: z. B. Polyethylen-block-Polyethylenoxid, Dendrimere, z.B. hydroxylgruppenhaltige Dendrimere.

Geeignete Antinukleierungsmittel sind Azinfarbstoffe wie z.B. Nigrosin.

Geeignete Flammschutzmittel sind insbesondere
a) Anorganische Flammschutzmittel wie z.B. Al(OH)₃, Mg(OH)₂, AlO(OH), MgCO₃, Schichtsilikate wie z.B. Montmorillonit oder Sepiolit, nicht oder organisch modifiziert, Doppelsalze, wie z.B. Mg-Al-Silikate, POSS-(Polyhedral Oligomeric Silsesquioxane) Verbindungen, Huntit, Hydromagnesit oder Halloysit sowie Sb₂O₃, Sb₂O₅, MoO₃, Zinkstannat, Zinkhydroxystannat,
b) Stickstoffhaltige Flammschutzmittel wie z.B. Melamin, Melem, Melam, Melon, Melaminderivate, Melaminkondensationsprodukte oder Melaminsalze, Benzoguanamin, Polyisocyanurate, Allantoin, Phosphacene, insbesondere Melamincyanurat, Melaminphosphat, Dimelaminphosphat, Melaminpyrophosphat, Melaminpolyphosphat, Melamin-Metall-Phosphate wie z.B. Melaminaluminiumphosphat, Melaminzinkphosphat, Melaminmagnesiumphosphat, sowie die entsprechenden Pyrophosphate und Polyphosphate, Poly-[2,4-(piperazin-1,4-yl)-6-(morpholin-4-yl)-1,3,5-triazin], Ammoniumpolyphosphat, Melaminborat, Melaminhydrobromid,
c) Radikalbildner, wie z. B. Alkoxyamine, Hydroxylaminester, Azoverbindungen, Triazenverbindungen, Disulfide, Polysulfide, Thiole, Thiuramsulfide, Dithiocarbamate, Mercaptobenzthiazole Sulfenamide, Sulfenimide
d) Dicumyl oder Polycumyl, Hydroxyimide und deren Derivate wie z.B. Hydroxyimidester oder Hydroxyimidether
e) Phosphorhaltige Flammschutzmitteln wie z.B. roter Phosphor, Phosphate wie z.B. Resorcindiphosphat, Bisphenol-A-diphosphat und ihre Oligomere, Triphenylphosphat, Ethylendiamindiphosphat, Phosphinate wie z.B. Salze der hypophosphorigen Säure und Ihrer Derivate wie Alkylphosphinatsalzen z.B. Diethylphosphinataluminium oder Diethylphosphinat-Zink oder Aluminiumphosphinat, Aluminiumphosphit, Aluminiumphosphonat, Phosphonatester, oligomere und polymere Derivate der Methanphosphonsäure, 9,10-Dihydro-9-oxa-10-phosphorylphenanthren-10-oxid (DOPO) und deren substituierte Verbindungen,
f) Halogenhaltige Flammschutzmittel auf Chlor- und Brombasis wie z.B. polybrominierte Diphenyloxide, wie z.B. Decabromdiphenyloxid, Tris(3-bromo-2,2-bis(bromomethyl)propyl-phosphat, Tris(tribromneopentyl)phosphat, Tetrabromphthalsäure, 1,2-Bis-(tribromphenoxy)ethan, Hexabromcyclododecan, bromiertes Diphenylethan, Tris-(2,3-dibrompropyl)isocyanurat, Ethylen-bis(tetrabromo-phthalimid), Tetrabromo-bisphenol A, bromiertes Polystyrol, bromiertes Polybutadien bzw, Polystyrol-bromiertes Polybutadien-Copolymere, bromierter Polyphenylenether, bromiertes Epoxidharz, Polypentabrombenzylacrylat, ggf. in Kombination mit Sb₂O₃ und/oder Sb₂O₅,
g) Borate wie z.B. Zinkborat oder Calciumborat, ggf. auf Trägermaterial wie z.B. Silica
h) Schwefelhaltige Verbindungen wie z.B. elementarer Schwefel, Disulfide und Polysulfide, Thiuramsulfid, Dithiocarbamate, Mercaptobenzthiazol und Sulfenamide,
i) Antidrip-Mitteln wie z.B. Polytetrafluorethylen,
j) Siliciumhaltige Verbindungen wie z.B. Polyphenylsiloxane,
k) Kohlenstoffmodifikationen wie z.B. Carbon-Nanoröhren (CNT), Blähgraphit oder Graphen
l) sowie Kombinationen oder Mischungen hieraus.

Ganz besonders bevorzugte Flammschutzmittel sind halogenfrei und sind die folgenden Verbindungen:

Al(OH)₃, Mg(OH)₂,

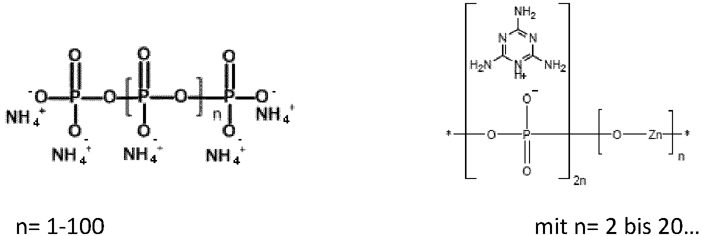

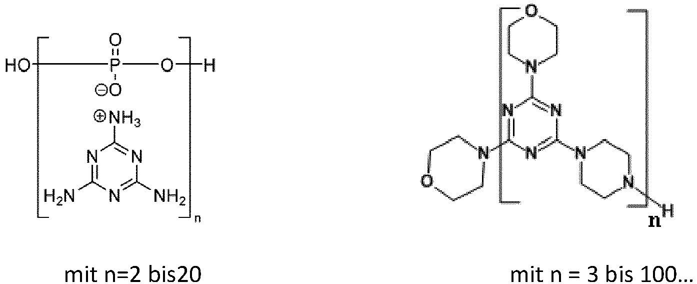

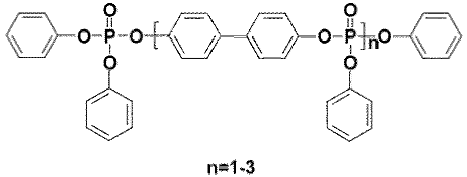

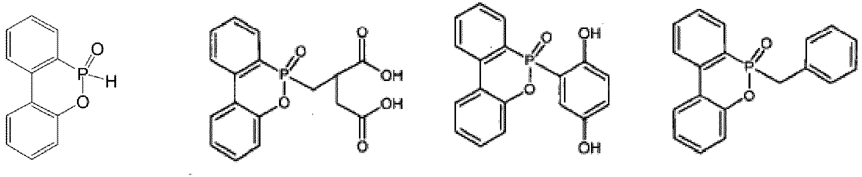

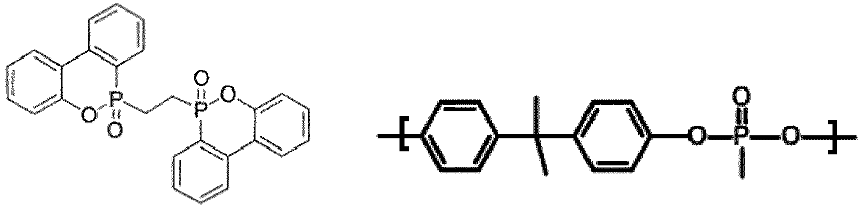

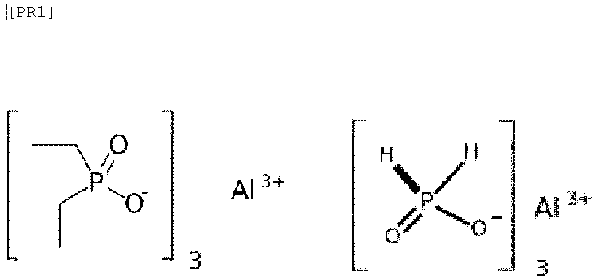

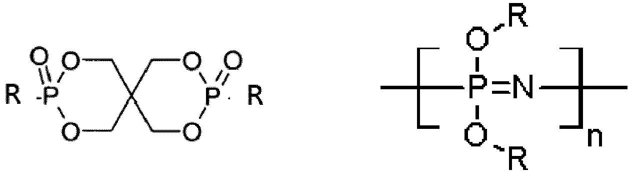

mit jeweils R= Alkyl, Phenyl und n = 3 bis 20

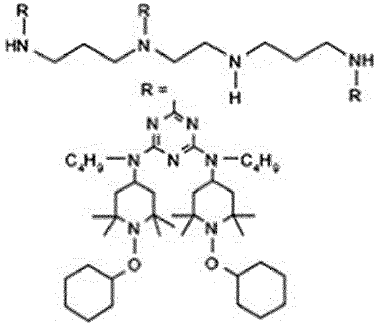

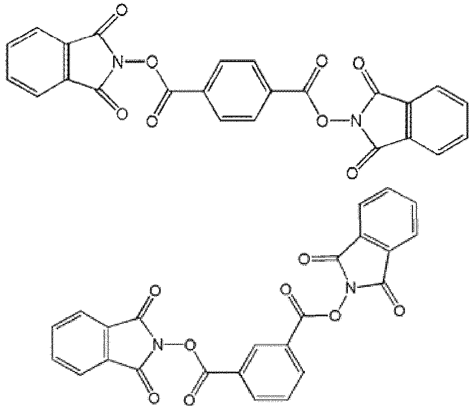

Geeignete Weichmacher sind beispielsweise Phthalsäureester, Adipinsäureester, Ester der Zitronensäure, Ester der 1,2-Cyclohexandicarbonsäure, Trimellithsäureester, Isosorbidester, Phosphatester, Epoxide wie z.B. epoxidiertes Sojabohnenöl oder aliphatische Polyester.

Geeignete Gleitmittel und Verarbeitungshilfsmittel sind beispielsweise Polyethylenwachse, Polypropylenwachse, Salze von Fettsäuren wie z.B. Calciumstearat, Zlnkstearat oder Salze von Montanwachsen, Amidwachse wie z.B. Erucasäureamid oder Ölsäureamide, Fluorpolymere, Silikone oder Neoalkoxytitanate- und Zirkonate.

Geeignete Pigmente können anorganischer oder organischer Natur sein. Anorganische Pigmente sind beispielsweise Titandioxid, Zinkoxid, Zinksulfid, Eisenoxid, Ultramarin, Ruß, organische Pigmente sind beispielsweise Anthrachinone, Anthanthrone, Benzimidazolone, Chinacridone, Diketopyrrolopyrrole, Dioxazine, Indanthrone, Isoindolinone, AzoVerbindungen, Perylene, Phthalocyanine oder Pyranthrone. Weitere geeignete Pigmente sind Effektpigmente auf Metallbasis oder Perlglanzpigmente auf Metalloxid-Basis.

Geeignete Optische Aufheller sind beispielsweise Bisbenzoxazole, Phenylcumarine oder Bis(styryl)biphenyle und insbesondere optische Aufheller der Formeln:

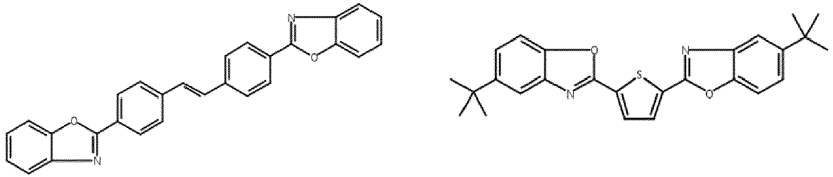

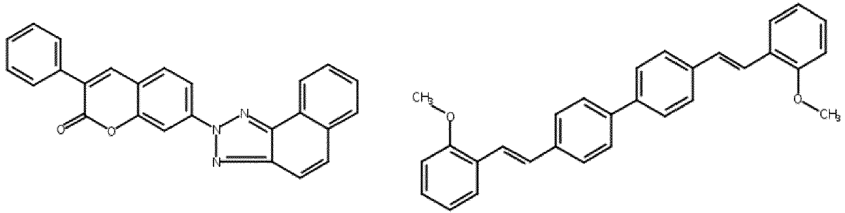

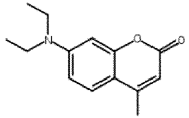

Geeignete Füllstoffdeaktivatoren sind beispielsweise Polysiloxane, Polyacrylate insbesondere Blockcopolymere wie Polymethacrylsäurepolyalkylenoxid oder Polyglycidyl(meth)acrylate und deren Copolymere z.B. mit Styrol sowie Epoxide z.B. der folgenden Strukturen:

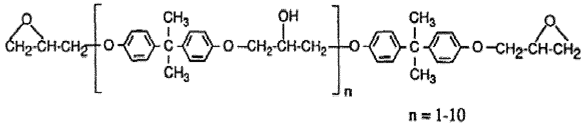

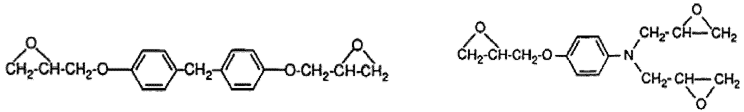

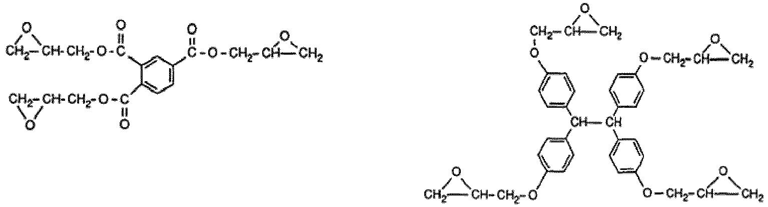

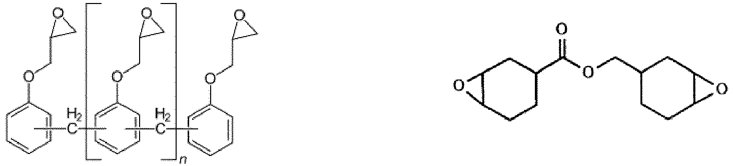

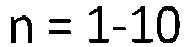

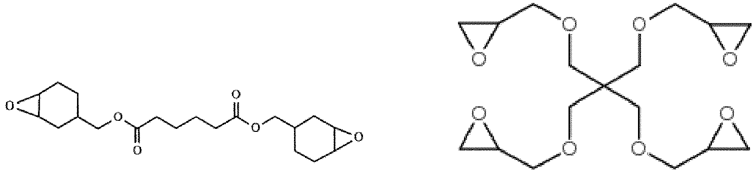

Geeignete Antistatika sind beispielsweise ethoxylierte Alkylamine, Fettsäureester, Alkylsulfonate und Polymere wie z.B. Polyetheramide.

Geeignete Antiozonantien sind die oben genannten Amine wie z.B. N,N'-Diisopropyl-p-phenylendiamin, N,N'-Di-sec-butyl-p-phenylendiamin, N,N'-Bis(1,4-dimethylpentyl)-p-phenylendiamin, N,N'-Dicyclohexyl-p-phenylendiamin, N-Isopropyl-N'-phenyl-p-phenylendiamin, N-(1,3-Dimethylbutyl)-N'-phenyl-p-phenylen-diamin, N-(1-Methylheptyl)-N'-phenyl-p-phenylendiamin, N-Cyclohexyl-N'-phenyl-p-phenylendiamin

Geeignete Rheologiemodifikatoren z.B. für die Herstellung von Controlled rheology Polypropylen (CR-PP) sind beispielsweise Peroxide, Alkoxyaminester, Oxyimidsulfonsäureester und insbesondere die folgenden Strukturen:

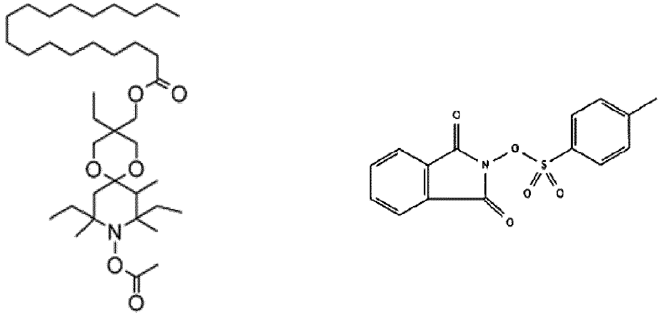

Geeignete Nukleierungsmittel sind Talkum, Alkali oder Erdalkalisalze von mono- und polyfunktionellen Carbonsäuren wie z. B. Benzoesäure, Bernsteinsäure, Adipinsäure, z.B. Natriumbenzoat, Zinkglycerolat, Aluminiumhydroxy-bis(4-*tert*-butyl)benzoat, 2,2'-Methylen-bis-(4,6-di-*tert*-butylphenyl)phosphat, sowie Trisamide und Diamide wie z.B. Trimesinsäuretricyclohexylamid, Trimesin-säuretri(4-methylcyclohexylamid), Trimesinsäure tri(tert.butylamid), N,N',N"-1,3,5-Benzoltriyltris(2,2-dimethyl-propanamid) oder 2,6-Naphthalindicarbosäuredicyclohexylamid.

Geeignete Additive zum Molekulargewichtsaufbau von Polykondensationspolymeren (Kettenverlängerer) sind Diepoxide, Bis-Oxazoline, Bis-Oxazolone, Bis-Oxazine, Diisocyanate, Dianhydride, Bis-Acyllactame, Bis-Maleimide, Dicyanate, Carbodiimide. Weitere geeignete Kettenverlängerer sind polymere Verbindungen wie z. B. Polystyrol-Polyacrylat-Polyglycidyl(meth)acrylat- Copolymere, Polystyrol-Maleinsäureanhydrid-Copolymere und Polyethylen-Maleinsäureanhydrid-Copolymere.

Geeignete Additive zur Erhöhung der elektrischen Leitfähigkeit sind beispielsweise die erwähnten Antistatika, Ruß und Kohlenstoffverbindungen wie Kohlenstoff-Nanoröhrchen und Graphen, Metallpulver wie z.B. Kupferpulver und leitfähige Polymere wie bsp. Polypyrrole, Polyaniline und Polythiophene. Geignete Additive zur Erhöhung der thermischen Leitfähigkeit sind beispielsweise Aluminumnitride und Bornitride.

Geeignete Infrarot-aktive Additive sind beispielsweise Aluminumsilikate, Hydrotalcite oder Farbstoffe wie Phthalocyanine oder Anthrachinone.

Geeignete Entformungshilfsmittel sind beispielsweise Silikone, Seifen und Wachse wie z.B. Montanwachse.

Die Einarbeitung der Komponenten (A) und (B) sowie ggf. der zusätzlichen Zusatzstoffe in das Kunststoff-Rezyklat kann durch übliche Verarbeitungsmethoden erfolgen, wobei das Polymere aufgeschmolzen und mit der erfindungsgemäßen Additivzusammensetzung und den ggf. weiteren Zusätzen gemischt wird, vorzugsweise durch Mischer, Kneter und Extruder. Als Verarbeitungsmaschinen bevorzugt sind Extruder wie z.B. Einschneckenextruder, Zweischneckenextruder, Planetwalzenextruder, Ringextruder, Co-Kneter, die vorzugsweise mit einer Vakuumentgasung ausgestattet sind. Die Verarbeitung kann dabei unter Luft oder ggf. unter Inertgasbedingungen wie z.B. unter Stickstoff erfolgen.

Weiterhin können die Komponenten (A) und (B) in Form von sogenannten Masterbatchen oder Konzentraten, die beispielsweise 10-90 % einer Stabilisator-Zusammensetzung bestehend aus den Komponenten (A) und (B) in einem Polymeren enthalten, hergestellt und eingebracht werden.

Weiterhin ist es bevorzugt, dass das thermoplastische Kunststoff-Rezyklat ausgewählt ist aus der Gruppe bestehend aus
a) rezyklierten Polymeren aus Olefinen oder Diolefinen, wie z.B. Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure,
b) rezykliertem Polystyrol, Polymethylstyrol, Polyvinylnaphthalin, Styrol-Butadien (SB), Styrol-Butadien-Styrol (SBS), Styrol-Ethylen-Butylen-Styrol (SEBS), Styrol-Ethylen-Propylen-Styrol, Styrolisopren, Styrol-Isopren-Styrol (SIS), Styrol-butadien-acrylnitril (ABS), Styrol-acrylnitril-acrylat (ASA), Styrol-Ethylen, Styrol-Maleinsäureanhydrid-Polymeren einschließlich entsprechenden Pfropfcopolymeren wie z.B. Styrol auf Butadien, Maleinsäureanhydrid auf SBS oder SEBS, sowie Pfropfcopolymeren aus Methylmethacrylat, Styrol-Butadien und ABS (MABS),
c) rezyklierten Polymeren von ungesättigten Estern wie z.B. Polyacrylate und Polymethacrylate wie Polymethylmethacrylat (PMMA), Polybutylacrylat, Polylaurylacrylat, Polystearylacrylat, Polyacrylnitril, Polyacrylamide, und entsprechenden Copolymeren wie z.B. Polyacrylnitril-Polyalkylacrylat,
d) rezyklierten Polymeren aus ungesättigten Alkoholen und Derivaten, wie z.B. Polyvinylalkohol, Polyvinylacetat, Polyvinylbutyral,
e) rezyklierten Polyacetalen, wie z.B. Polyoxymethylen (POM), und entsprechenden Copolymeren, wie z.B. Copolymere mit Butanal,
f) rezyklierten Polyphenylenoxiden und Blends von diesen mit Polystyrol oder Polyamiden,
g) rezyklierten Polymeren von cyclischen Ethern wie z.B. Polyethylenglycol, Polypropylenglycol, Polyethylenoxid, Polypropylenoxid,
h) rezyklierten Polyurethanen aus hydroxyterminierten Polyethern oder Polyestern und aromatischen oder aliphatischen Isocyanaten, insbesondere lineare Polyurethane, Polyharnstoffen,
i) rezyklierten Polyamiden wie z.B. Polyamid-6, 6.6, 6.10, 4.6, 4.10, 6.12, 12.12, Polyamid 11, Polyamid 12 sowie (teil-)aromatische Polyamide wie z.B. Polyphthalamide, z.B. hergestellt aus Terephthalsäure und/oder Isophthalsäure und aliphatischen Diaminen oder aus aliphatischen Dicarbonsäuren wie z.B. Adipinsäure oder Sebazinsäure und aromatischen Diaminen wie z.B. 1,4- oder 1,3-Diaminobenzol,
j) rezyklierten Polyimiden, Polyamid-imiden, Polyetherimiden, Polyesterimiden, Poly(ether)ketonen, Polysulfonen, Polyethersulfonen, Polyarylsulfonen, Polyphenylensulfid, Polybenzimidazolen, Polyhydantoinen,
k) rezyklierten Polyestern aus aliphatischen oder aromatischen Dicarbonsäuren und Diolen oder aus Hydroxy-Carbonsäuren wie z.B. Polyethylenterephthalat (PET), Polybutylenterephthalat (PBT), Polypropylenterphthalat, Polyethylennaphthylat, Poly-1,4-di-methylocyclohexanterphthalat, Polyhydroxybenzoat, Polyhydroxynaphthalat, Polymilchsäure,
l) rezyklierten Polycarbonaten, Polyestercarbonaten, sowie Blends von diesen wie z.B. PC/ABS, PC/PBT, PC/PET/PBT,
m) rezyclierten halogenhaltigen Poylmeren, wie z.B. PVC, PVDC,
n) rezyklierten Cellulosederivaten, wie z.B. Cellulosenitrat, Celluloseacetat, Cellulosepropionat, Cellulosebutyrat,
o) sowie Mischungen, Kombinationen oder Blends aus zwei oder mehr der zuvor genannten Polymere.

Besonders bevorzugt ist das thermoplastische Kunststoff-Rezyklat ausgewählt aus der Gruppe bestehend aus Polymeren aus Olefinen oder Diolefinen, wie z.B. Polyethylen, insbesondere LDPE, LLDPE, VLDPE, ULDPE, MDPE, HDPE und UHMWPE, Metallocen-PE (m-PE), Polypropylen, Poylisobutylen, Poly-4-methyl-penten-1, Polybutadien, Polyisopren, Polycycloocten, Polyalkylen-Kohlenmonoxid-Copolymeren, sowie entsprechenden Copolymeren in Form von statistischen oder Blockstrukturen wie z.B. Polypropylen-Polyethylen (EP), EPM oder EPDM, Ethylen-Vinylacetat (EVA), Ethylen-Acrylester, wie z.B. Ethylen-Butylacrylat, Ethylen-Acrylsäure-Glycidylacrylat, und entsprechenden Propfpolymeren wie z.B. Polypropylen-g-Maleinsäureanhydrid, Polypropylen-g-Acrylsäure und Polyethylen-g-Acrylsäure.

Ganz besonders bevorzugt ist der eine thermoplastische Kunststoff ein Polyolefin-Rezyklat. Beispielsweise kann es sich beim thermoplastischen Kunststoff-Rezyklat um Polypropylen, insbesondere also um ein Polypropylen-Rezyklat oder um Polyethylen, insbesondere also ein Polyethylen-Rezyklat, handeln.

Weiterhin werden vorzugsweise im erfindungsgemäßen Verfahren
(A) 0,02 bis 3 Gew.-Teile, bevorzugt 0,03 bis 0,5 Gew.-Teile, mindestens eines substituierten Zuckers, und
(B) 0,04 bis 6 Gew.-Teile, bevorzugt 0,06 bis 1 Gew.-Teile, mindestens eines primären Antioxidans und/oder mindestens eines sekundären Antioxidans,
in 91 bis 99,94 Gew.-Teile, bevorzugt 98,5 bis 99,91 Gew.-Teile, mindestens eines thermoplastischen Kunststoff-Rezyklats eingebracht.

Weiterhin ist es bevorzugt, dass
(A) 0,02 bis 3 Gew.-Teile, bevorzugt 0,03 bis 0,5 Gew.-Teile, mindestens eines substituierten Zuckers
(B1) 0,02 bis 3 Gew.-Teile, bevorzugt 0,03 bis 0,5 Gew.-Teile, mindestens eines primären Antioxidans,
(B2) 0,02 bis 3 Gew.-Teile, bevorzugt 0,03 bis 0,5 Gew.-Teile, mindestens eines sekundären Antioxidans, und
in 91 bis 99,94 Gew.-Teile, bevorzugt 98,5 bis 99,91 Gew.-Teile, mindestens eines thermoplastischen Kunststoff-Rezyklats eingebracht werden.

Die vorliegende Erfindung betrifft weiterhin ein Kunststoffzusammensetzung, enthaltend oder bestehend aus
(A) mindestens einem substituierten Zuckers (Komponente (A)), und
(B) mindestens einem em thermoplastischem Kunststoff-Rezyklat.

In diesem Fall sind in der Kunststoffzusammensetzung - mit Ausnahme der ggf. bereits im Rezyklat enthaltenden primären und/oder sekundären Antioxidantien keine weiteren primären und/oder sekundären (frischen) Antioxidantien zugesetzt.

Die im Rezyklat enthaltenen primären und/oder sekundären Antioxidantien, sowie deren Abbauprodukte können, wenn erforderlich, durch übliche dem Fachmann bekannte Analysenmethoden z.B. durch chromatographische Methoden wie z.B. HPLC, ggf. nach Extraktion aus dem Polymeren mittels einem geeigneten Lösungsmittel und nachfolgende Aufkonzentration durch Entfernung des Lösungsmittels, bestimmt werden.

Zudem betrifft die vorliegende Erfindung auch eine Kunststoffzusammensetzung, enthaltend oder bestehend aus
(A) mindestens einen substituierten Zucker,,
(B) mindestens einem primären Antioxidans und/oder mindestens einem sekundären Antioxidans, und
(C) mindestens einem thermoplastischen Kunststoff-Rezyklat.

In einer bevorzugten Ausführungsform zeichnet sich die Kunststoffzusammensetzung dadurch aus, dass die Kunststoffzusammensetzung
(A) 0,02 bis 3 Gew.-Teile, bevorzugt 0,03 bis 0,5 Gew.-Teile, mindestens eines substituierten Zuckers,
(B) 0,04 bis 6 Gew.-Teile, bevorzugt 0,06 bis 1 Gew.-Teile, mindestens eines primären Antioxidans und/oder mindestens eines sekundären Antioxidans, und
(C) 91 bis 99,94 Gew.-Teile, bevorzugt 98,5 bis 99,91 Gew.-Teile, mindestens eines thermoplastischen Kunststoffs
enthält oder hieraus besteht.

Vorzugsweise enthält die erfindungsgemäße Zusammensetzung mindestens ein primäres Antioxidans und mindestens ein sekundäres Antioxidans.

Eine weitere bevorzugte Ausführungsform ist dadurch gekennzeichnet, dass die Kunststoffzusammensetzung
(A) 0,02 bis 3 Gew.-Teile, bevorzugt 0,03 bis 0,5 Gew.-Teile, mindestens eines substituierten Zuckers,
(B1) 0,02 bis 3 Gew.-Teile, bevorzugt 0,03 bis 0,5 Gew.-Teile, mindestens eines primären Antioxidans,
(B2) 0,02 bis 3 Gew.-Teile, bevorzugt 0,03 bis 0,5 Gew.-Teile, mindestens eines sekundären Antioxidans, und
(C) 91 bis 99,94 Gew.-Teile, bevorzugt 98,5 bis 99,91 Gew.-Teile, mindestens eines thermoplastischen Kunststoff-Rezyklats.
enthält oder hieraus besteht.

Gemäß einer weiteren bevorzugten Ausführungsform enthält die erfindungsgemäße Kunststoffzusammensetzung zusätzlich mindestens einen Zusatzstoff, welcher ausgewählt ist aus der Gruppe bestehend aus UV-Absorbern, Lichtstabilisatoren, Metalldesaktivatoren, Füllstoffdesaktivatoren, Antiozonantien, Nukleierungsmitteln, Antinukleierungsmitteln, Schlagzähigkeitsverbesserern, Weichmachern, Gleitmitteln, Rheologiemodifikatoren, Thixotropiemitteln, Kettenverlängerern, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobisierungsmitteln, Haftvermittlern, Dipergiermitteln, Kompatibilisatoren, Sauerstofffängern, Säurefängern, Treibmitteln, Abbau-Additiven, Entschäumungsmitteln, Geruchsfängern, Markierungsmitteln, Antifoggingmitteln, Füllstoffen, Verstärkungsstoffen und Mischungen hiervon.

Weiterhin ist es bevorzugt, dass die Kunststoffzusammensetzung zusätzlich mindestens einen Zusatzstoff enthält, welcher ausgewählt ist aus der Gruppe bestehend aus
a) Säurefängern, vorzugsweise Calciumstearat, Magnesiumstearat, Zinkstearat, Aluminiumstearat, Calciumstearat, Calciumlactat, Calciumstearoyl-2-lactat, Hydrotalcite, insbesondere synthetische Hydrotalciten auf Aluminium-, Magnesium- und Zinkbasis, Hydrocalumite, Zeolithe, Erdalkalioxide, insbesondere Calciumoxid und Magnesiumoxid, Zinkoxid, Erdalkalicarbonate, insbesondere Calciumcarbonat, Magnesiumcarbonat und Dolomit, und Hydroxide, insbesondere Brucit,
b) Lichtstabilisatoren, vorzugsweise Lichtstabilisatoren aus der Gruppe der gehinderten Amine,
c) Dispergiermitteln,
d) Füllstoffdesaktivatoren, und
Mischungen hiervon.

Wird dem Rezyklat nur ein substituierter Zucker als Stabilisator hinzugegeben, so ist in einer bevorzugten Ausführungsform insbesondere ein Säurefänger der weitere Zusatzstoff. Bevorzugte Säurefänger sind oben definiert.

Vorzugweise ist die erfindungsgemäße Kunststoffzusammensetzung mit einem erfindungsgemäßen Verfahren zur Stabilisierung von thermoplastischen Kunststoffen gegen oxidativen, thermischen und/oder aktinischen Abbau herstellbar oder wurde damit hergestellt.

Sämtliche bereits bezüglich des erfindungsgemäßen Verfahrens beschriebenen bevorzugten Varianten, beispielhaften Ausführungsformen und Kommentare (z.B. bezüglich möglicher zu verwendender Komponenten und Zusatzstoffe) gelten auch entsprechend für die erfindungsgemäße Kunststoffzusammensetzung.

Die vorliegende Erfindung betrifft auch eine Formmasse oder ein Formteil, die herstellbar aus erfindungsgemäßen Kunststoffzusammensetzung ist, insbesondere in Form von Spritzgussteilen, Folien, Filmen, Lacken, Beschichtungen, Schäumen, Fasern, Kabeln, Rohren, Profilen, Hohlkörpern, Bändchen, Membranen, z.B. Geomembranen, Schmierstoffen, Farbmitteln und/oder Klebstoffen, die über Extrusion, Spritzguss, Blasformen, Kalandrieren, Pressverfahren, Spinnprozesse und/oder Rotomoulding hergestellt werden z.B. für die Elektroindustrie, für die Bauindustrie, für die Transportindustrie (Auto, Flugzeug, Schiff, Bahn), für medizinische Anwendungen, für Haushalts- und Elektrogeräte, für Fahrzeugteile, für Konsumartikel, für Verpackungen, für Möbel, und/oder für Textilien.

Im Weiteren betrifft die vorliegende Erfindung auch eine Stabilisator-Zusammensetzung zur Stabilisierung von thermoplastischen Kunststoff-Rezyklaten, vorzugsweise thermoplastischen Kunststoff-Rezyklaten, gegen oxidativen, thermischen und/oder aktinischen Abbau, bestehend aus
(A) mindestens einem substituierten Zucker, und
(B) mindestens einem primären Antioxidans und/oder mindestens einem sekundären Antioxidans.

Sämtliche bereits bezüglich des erfindungsgemäßen Verfahrens sowie bezüglich der erfindungsgemäßen Kunststoffzusammensetzung beschriebenen bevorzugten Varianten, beispielhaften Ausführungsformen und Kommentare (z.B. bezüglich möglicher zu verwendender Komponenten und Zusatzstoffe) gelten auch entsprechend für die erfindungsgemäße Stabilisator-Zusammensetzung.

Die vorliegende Erfindung betrifft auch die Verwendung mindestens substituierten Zuckers zur Stabilisierung von thermoplastischen Kunststoff-Rezyklaten gegen oxidativen, thermischen und/oder aktinischen Abbau.

Ferner betrifft die vorliegende Erfindung die Verwendung der erfindungsgemäßen Stabilisator-Zusammensetzung oder einer Stabilisator-Zusammensetzung enthaltend oder bestehend aus
(A) mindestens einem substituierten Zucker und
(B) mindestens einem primären Antioxidans und/oder mindestens einem sekundären Antioxidans,
zur Stabilisierung von thermoplastischen Kunststoffen, vorzugsweise von thermoplastischen Kunststoff-Rezyklaten, gegen oxidativen, thermischen und/oder aktinischen Abbau.

Bevorzugte thermoplastische Kunststoffe sind dabei dieselben wie die bezüglich des erfindungsgemäßen Verfahrens bzw. die bezüglich der erfindungsgemäßen Kunststoffzusammensetzung genannten.

Besonders bevorzugt wird die Stabilisator-Zusammensetzung zur Stabilisierung von Polyolefin-Rezyklaten und gegen oxidativen, thermischen und/oder aktinischen Abbau verwendet.

Sämtliche bereits bezüglich des erfindungsgemäßen Verfahrens sowie bezüglich der erfindungsgemäßen Kunststoffzusammensetzung und bezüglich der erfindungsgemäßen Stabilisator-Zusammensetzung beschriebenen bevorzugten Varianten, beispielhaften Ausführungsformen und Kommentare (z.B. bezüglich möglicher zu verwendender Komponenten und Zusatzstoffe) gelten auch entsprechend für die erfindungsgemäße Verwendung einer Stabilisator-Zusammensetzung.

Die vorliegende Erfindung wird anhand der nachfolgenden Ausführungsbeispiele näher erläutert, ohne die Erfindung auf die dargestellten Beispiele zu beschränken.

Zur Prüfung der Wirkung der erfindungsgemäßen Stabilisatoren-Zusammensetzung wurde ein post-consumer Polypropylen-Rezyklat aus Batteriekastenmahlgut (Lieferant: BSB Braubach) zusammen mit den in der Tabelle angegebenen Zusätzen bei 210 °C in einem Doppelschnecken-Microextruder (MC 5, Hersteller DSM) im kontinuierlichen Modus bei 90 Umdrehungen pro Minute während 30 Minuten in der Schmelze im Kreis gefördert. Nach 10, 20 und 30 Minuten wird jeweils die Kraftaufnahme gemessen. Die Kraft ist ein Maß für die Zähigkeit der Schmelze und damit für das Molekulargewicht. Je höher die verbliebene Kraft (Nach Aufschmelzzeit von 2 Minuten = 100 %), desto geringer ist der Abbau des Polymeren.

Der Zusatz von 0.1 bis 0.3 % eines Stearoylsubstituierten Mannits (> 90 % monosubstituiert) führt im Vergleich zu einem Rezyklat ohne Zusatz zu einer erhöhten Verarbeitungsstabilisierung, d.h. zu einer höheren Restkraft. Eine weitere Verbesserung der Verarbeitungsstabilität wird erreicht, indem zu 0.2 % des stearoylsubstituierten Mannits 0.1 % primäres Antioxidans (Pentaerythritol-tetrakis [3-(3,5-di-*tert*-butyl-4-hydroxyphenyl)propionat) und 0.1 % sekundäres Antioxidans (Tris-(2,4-di-*tert*-butylphenyl)phosphit) zugegeben werden.

In analoger Weise führt der Zusatz des Distearylesters der Schleimsäure in einer Konzentration von 0.1 bis 0.5 % im Vergleich zu einem Polypropylen-Rezyklat ohne Zusatz zu einer erhöhten Verarbeitungsstabilisierung, d.h. zu einer höheren Restkraft nach 30 Minuten.

Weiterhin wurden Kombinationen eines stearoylsubstituierten Mannits in einer Konzentration von 0,2 % in
1) LLDPE/LDPE Folienagglomerate aus Industriesammlungen zusammen mit 0,2 % Octadecyl-3-(3,5-di-tert-butyl-4-hydroxyphenyl)propionat bei 210 °C
2) Polyethylen/Polypropylen-Mischung aus aufbereiteten Wertstoffsammlungen zusammen mit 0.1 % Pentaerythritol-tetrakis [3-(3,5-di-*tert*-butyl-4-hydroxyphenyl)propionat) und 0.1 % (Tris-(2,4-di-*tert-*butylphenyl)phosphit bei 210 °C
3) Polylactid (PLA) aus gebrauchten Getränkebechern zusammen mit 0.1 % Pentaerythritol-tetrakis [3-(3,5-di-*tert*-butyl-4-hydroxyphenyl)propionat bei 200 °C
4) Polystyrol aus Wertstoffsammlungen mit 0.1 % Wingstay L (Reaktionsprodukt von 4-Methylphenol mit Dicyclopentadien and isobuten) bei 230°C
verarbeitet. In allen Fällen ergibt sich im Vergleich zum nicht nachstabilisierten Rezyklat eine verbesserte Verarbeitungsstabilisierung.

## Patentansprüche

1. Verfahren zur Stabilisierung von thermoplastischen Kunststoff-Rezyklaten gegen oxidativen, thermischen und/oder aktinischen Abbau, bei dem
(A) mindestens ein substituierter Zucker, ausgewählt aus der Gruppe bestehend aus
(a1) mindestens einem Ester und/oder Ether eines Alditols oder Cyclitols,
(a2) mindestens einem Ester einer Zuckersäure, und/oder
(a3) mindestens einem Amid und/oder substiuiertem Amin eines Aminozuckers,
sowie Mischungen und Kombinationen hiervon,
in ein thermoplastisches Kunststoff-Rezyklat eingebracht werden.

2. Verfahren nach Anspruch 1, **dadurch gekennzeichnet, dass** der mindestens eine substituierte Zucker mindestens 3, bevorzugt mindestens 4 freie OH-Gruppen aufweist und/oder mono- oder disubstituiert ist.

3. Verfahren gemäß einem der vorhergehenden Ansprüche, **dadurch gekennzeichnet, dass** das mindestens eine Alditol, von dem sich die substituierten Zucker ableiten, die Summenformel
HOCH₂[CH(OH)]ₙCH₂OH,
R₁-OCH₂[CH(OH)]ₙCH₂OH,
oder
HOCH₂[CH(OH)]ₙ[CH(OR₁)]CH₂OH
mit n = 2-6, bevorzugt n = 3-5 aufweist, wobei R₁ ein gegebenenfalls substituierter Zuckerrest ist, insbesondere ausgewählt ist aus der Gruppe bestehend aus Threit, Erythrit, Galactit, Mannit, Ribit, Sorbit, Xylit, Arabit, Isomalt, Lactit, Maltit, Maltotritol und hydrierte Oligo- und Polysaccharide mit Polyol-Endgruppen und Mischungen hiervon, wobei das mindestens eine Alditol vorzugsweise ausgewählt ist aus der Gruppe bestehend aus Erythrit, Mannit, Isomalt, Maltit und Mischungen hiervon.

4. Verfahren nach einem der vorhergehenden Ansprüche, **dadurch gekennzeichnet, dass**
das mindestens eine Cyclitol, von dem sich die substituierten Zucker ableiten, ausgewählt ist aus der Gruppe bestehend aus Inositol, Quercitol, Viscumitol, Bornesitol, Conduritol, Ononitol, Pinitol, Pinpollitol, Ciceritol, Quebrachitol, Chinasäure, Shikimisäure und Valienol wobei das mindestens eine Cyclitol vorzugsweise myo-Inosit ist,
die mindestens eine Zuckersäure, von dem sich die substituierten Zucker ableiten, ausgewählt ist aus der Gruppe bestehend aus Aldonsäuren oder Aldarsäuren, und/oder
das mindestens eine Zuckeramin, von dem sich die substituierten Zucker ableiten, ausgewählt ist aus der Gruppe bestehend aus 1-amino-1-deoxyalditolen oder alpha-omega-diamino-alpha-omega-dideoxyalditolen.

5. Verfahren nach einem der vorhergehenden Ansprüche, **dadurch gekennzeichnet, dass** der mindestens eine substituierte Zucker ausgewählt ist aus der Gruppe bestehend aus den nachfolgenden Verbindungen: 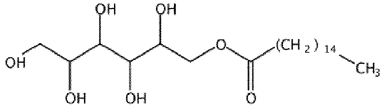 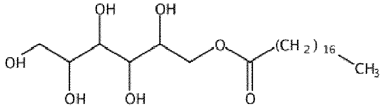 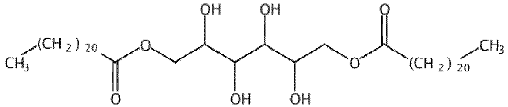 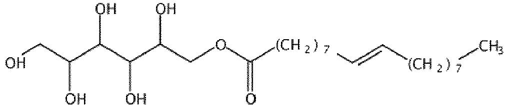 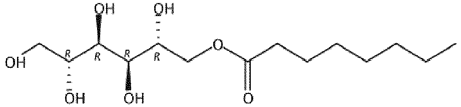 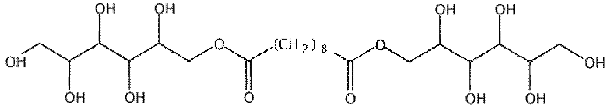 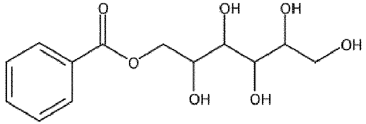 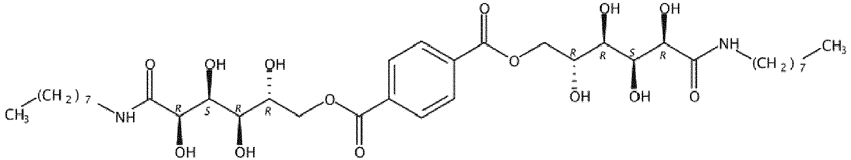 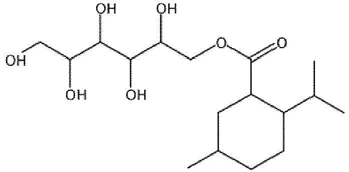 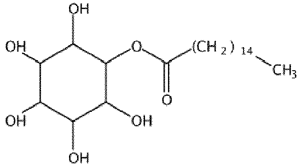 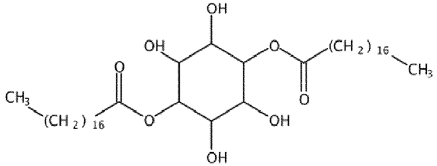 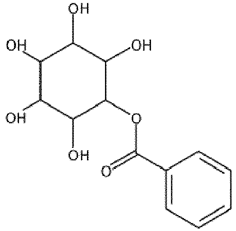 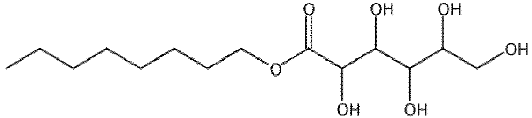 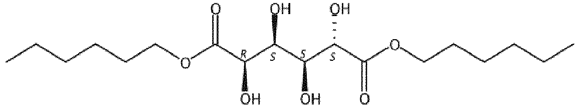 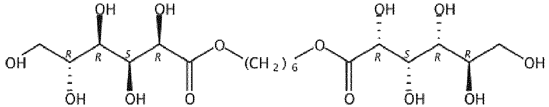 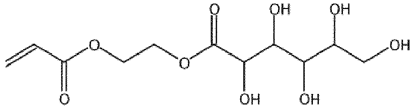 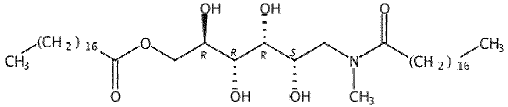 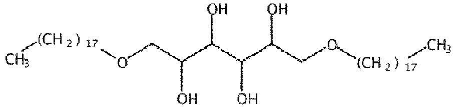 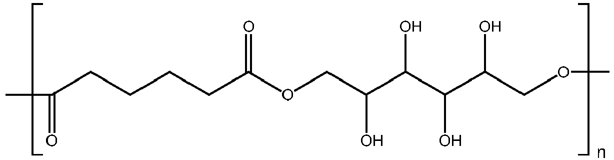 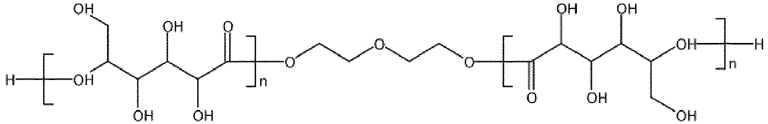 wobei n bei jedem Auftreten gleich oder verschieden ist und eine ganze Zahl zwischen 1 und 100 ist.

6. Verfahren gemäß einem der vorhergehenden Ansprüche, **dadurch gekennzeichnet, dass** bezogen auf 95,0 bis 99,99 Gew.-Teile bevorzugt 99,0 bis 99,98 Gew.-Teile des thermoplastischen Kunststoff-Rezyklats 0,01 bis 5,0 Gew.-Teile, bevorzugt 0,02 bis 1,0 Gew.-Teile des mindestens einen substituierten Zuckers (Komponente (A)) eingebracht werden.

7. Verfahren nach einem der vorhergehenden Ansprüche, **dadurch gekennzeichnet, dass** zusätzlich zum mindestens einen substituiertes Zucker mindestens ein primäres Antioxidans und/oder mindestens ein sekundäres Antioxidans (Komponente (B)) in das thermoplastische Kunststoff-Rezyklat eingebracht werden, wobei bevorzugt
das mindestens eine primäre Antioxidans ausgewählt ist aus der Gruppe bestehend aus phenolischen Antioxidantien, Aminen, Lactonen und Mischungen hiervon und/oder
das mindestens eine sekundäre Antioxidans ausgewählt ist aus der Gruppe bestehend aus Phosphorverbindungen, insbesondere Phosphiten und Phosphoniten, Organo-Schwefelverbindungen, insbesondere Sulfiden und Disulfiden, sowie Mischungen hiervon.

8. Verfahren gemäß vorhergehendem Anspruch, **dadurch gekennzeichnet, dass** mindestens ein primäres Antioxidans und mindestens ein sekundäres Antioxidans in das thermoplastische Kunststoff-Rezyklat eingebracht werden, insbesondere die Komponente (A) und die Komponente (B) in einem Gewichtsverhältnis von 95:5 bis 5:95, bevorzugt von 90:10 bis 10:90, besonders bevorzugt von 80:20 bis 20:80, in das thermoplastische Kunststoff-Rezyklat eingebracht werden.

9. Verfahren gemäß einem der beiden vorhergehenden Ansprüche, **dadurch gekennzeichnet, dass** die Komponenten (A) und/oder (B) durch
Mischen der als Feststoff vorliegenden Komponenten (A) und/oder (B) mit dem als Feststoff vorliegenden thermoplastischen Kunststoff-Rezyklat, Aufschmelzen der dabei entstehende Mischung und anschließendem Abkühlen, oder
Aufschmelzen der als Feststoff vorliegenden Komponenten (A) und/oder (B) und Einbringen der dabei entstehende Schmelze in eine Schmelze des thermoplastischen Kunststoff-Rezyklats
in das thermoplastische Kunststoff-Rezyklat eingebracht werden.

10. Verfahren gemäß einem der 7 bis 9, **dadurch gekennzeichnet, dass** bezogen auf 91 bis 99,94 Gew.-Teile, bevorzugt 98,5 bis 99,91 Gew.-Teile des thermoplastischen Kunststoff-Rezyklats
(A) 0,02 bis 3 Gew.-Teile, bevorzugt 0,03 bis 0,5 Gew.-Teile des mindestens einen substituierten Zuckers (Komponente (A)), und
(B) 0,04 bis 6 Gew.-Teile, bevorzugt 0,06 bis 1 Gew.-Teile des mindestens einen primären Antioxidans und/oder des mindestens einen sekundären Antioxidans (Komponente (B))
eingebracht werden.

11. Kunststoffzusammensetzung, enthaltend oder bestehend aus
(A) mindestens ein substituierter Zucker, ausgewählt aus der Gruppe bestehend aus
(a1) mindestens einem Ester und/oder Ether eines Alditols oder Cyclitols,
(a2) mindestens einem Ester einer Zuckersäure, und/oder
(a3) mindestens einem Amid und/oder substiuiertem Amin eines Aminozuckers,
sowie Mischungen und Kombinationen hiervon, und
(B) mindestens einem en thermoplastischem Kunststoff-Rezyklat,
wobei die Kunststoffzusammensetzung bevorzugt
0,01 bis 5,0 Gew.-Teile, bevorzugt 0,02 bis 1,0 Gew.-Teile des mindestens einen substituierten Zuckers (Komponente (A)) und 95,0 bis 99,99 bevorzugt 99,0 bis 99,98 Teile des thermoplastischen Kunststoff-Rezyklats
enthält oder hieraus besteht.

12. Kunststoffzusammensetzung, gemäß vorhergehendem Anspruch, enthaltend oder bestehend aus
mindestens einem substituierten Zucker (Komponente (A)),
mindestens einem primären Antioxidans und/oder mindestens einem sekundären Antioxidans (Komponente (B)), und
mindestens einem thermoplastischem Kunststoff-Rezyklat,
wobei die Kunststoffzusammensetzung bevorzugt
0,02 bis 3 Gew.-Teile, bevorzugt 0,03 bis 0,5 Gew.-Teile des mindestens eines einen substituierten Zuckers (Komponente (A)),
0,04 bis 6 Gew.-Teile, bevorzugt 0,06 bis 1 Gew.-Teile, mindestens eines primären Antioxidans und/oder mindestens eines sekundären Antioxidans (Komponente (B)), insbesondere 0,02 bis 3 Gew.-Teile, bevorzugt 0,03 bis 0,5 Gew.-Teile des mindestens einen primären Antioxidans (Komponente (B1)) und 0,02 bis 3 Gew.-Teile, bevorzugt 0,03 bis 0,5 Gew.-Teile, mindestens eines sekundären Antioxidans (Komponente (B2)), und
91 bis 99,94 Gew.-Teile, bevorzugt 98,5 bis 99,91 Gew.-Teile, mindestens eines en thermoplastischen Kunststoff-Rezyklats
enthält oder hieraus besteht.

13. Kunststoffzusammensetzung gemäß einem der beiden vorhergehenden Ansprüche, **dadurch gekennzeichnet, dass** die Kunststoffzusammensetzung zusätzlich mindestens einen Zusatzstoff, ausgewählt aus der Gruppe bestehend aus UV-Absorbern, Lichtstabilisatoren, Metalldesaktivatoren, Füllstoffdesaktivatoren, Antiozonantien, Nukleierungsmitteln, Antinukleierungsmitteln, Schlagzähigkeitsverbesserern, Weichmachern, Gleitmitteln, Rheologiemodifikatoren, Thixotropiemitteln, Kettenverlängerern, optischen Aufhellern, antimikrobiellen Wirkstoffen, Antistatika, Slipmitteln, Antiblockmitteln, Kopplungsmitteln, Vernetzungsmitteln, Antivernetzungsmitteln, Hydrophilisierungsmitteln, Hydrophobisierungsmitteln, Haftvermittlern, Dipergiermitteln, Kompatibilisatoren, Sauerstofffängern, Säurefängern, Treibmitteln, Abbau-Additiven, Entschäumungsmitteln, Geruchsfängern, Markierungsmitteln, Antifoggingmitteln, Füllstoffen, Verstärkungsstoffen und Mischungen hiervon, enthält.

14. Formteil herstellbar aus einer Kunststoffzusammensetzung nach einem der Ansprüche 11 bis 13, insbesondere in Form von Spritzgussteilen, Folien, Filmen, Lacken, Beschichtungen, Schäumen, Fasern, Kabeln, Rohren, Profilen, Hohlkörpern, Bändchen, Membranen, z.B. Geomembranen, Schmierstoffen, Farbmitteln und/oder Klebstoffen, die über Extrusion, Spritzguss, Blasformen, Kalandrieren, Pressverfahren, Spinnprozesse und/oder Rotomoulding hergestellt werden z.B. für die Elektroindustrie, für die Bauindustrie, für die Transportindustrie, für medizinische Anwendungen, für Haushalts- und Elektrogeräte, für Fahrzeugteile, für Konsumartikel, für Verpackungen, für Möbel, und/oder für Textilien.

15. Stabilisator-Zusammensetzung zur Stabilisierung von thermoplastischen Kunststoff-Rezyklaten gegen oxidativen, thermischen und/oder aktinischen Abbau, bestehend aus
(A) mindestens einem substituierter Zucker (Komponente (A)), ausgewählt aus der Gruppe bestehend aus
(a1) mindestens einem Ester und/oder Ether eines Alditols oder Cyclitols,
(a2) mindestens einem Ester einer Zuckersäure, und/oder
(a3) mindestens einem Amid und/oder substiuiertem Amin eines Aminozuckers,
sowie Mischungen und Kombinationen hiervon,
(B) mindestens einem primären Antioxidans und/oder mindestens einem sekundären Antioxidans(Komponente (B))
wobei bevorzugt die Komponente (A) und die Komponente (B) in einem Gewichtsverhältnis von 95:5bis 5:95, weiter bevorzugt von 90:10 bis 10:90, besonders bevorzugt von 80:20 bis 20:80 vorliegen.

16. Verwendung mindestens ein substituierter Zucker (Komponente (A)), ausgewählt aus der Gruppe bestehend aus
(a1) mindestens einem Ester und/oder Ether eines Alditols oder Cyclitols,
(a2) mindestens einem Ester einer Zuckersäure, und/oder
(a3) mindestens einem Amid und/oder substiuiertem Amin eines Aminozuckers,
sowie Mischungen und Kombinationen hiervon,
oder einer Stabilisator-Zusammensetzung nach vorhergehendem Anspruch
zur Stabilisierung von thermoplastischen Kunststoff-Rezyklaten gegen oxidativen, thermischen und/oder aktinischen Abbau.

## Claims

1. A method for stabilizing thermoplastic plastic recyclates against oxidative, thermal and/or actinic degradation, in which
(A) at least one substituted sugar selected from the group consisting of
(a1) at least one ester and/or ether of an alditol or a cyclitol;
(a2) at least one ester of a saccharic acid; and/or
(a3) at least one amide and/or substituted amine of an amino sugar,
and mixtures and combinations thereof,
are introduced into a thermoplastic plastic recyclate.

2. The method according to claim 1, **characterized in that** the at least one substituted sugar comprises at least 3, preferably at least 4, free OH groups and/or is monosubstituted or disubstituted.

3. The method according to any one of the preceding claims, **characterized in that** the at least one alditol from which the substituted sugars derive has the molecular formula
HOCH₂[CH(OH)]ₙCH₂OH,
R₁-OCH₂[CH(OH)]ₙCH₂OH,
or
HOCH₂[CH(OH)]ₙ[CH(OR₁)]CH₂OH
with n = 2-6, preferably n = 3-5, where R₁ is an optionally substituted sugar residue, which is in particular selected from the group consisting of threitol, erythritol, galactinol, mannitol, ribitol, sorbitol, xylitol, arabitol, ismaltol, lactitol, maltitol, maltotritol, and hydrogenated oligosaccharides and polysaccharides with polyol end groups, and mixtures thereof,
the at least one alditol preferably being selected from the group consisting of erythritol, mannitol, isomaltol, maltitol, and mixtures thereof.

4. The method according to any one of the preceding claims, **characterized in that**
the at least one cyclitol from which the substituted sugars derive is selected from the group consisting of inositol, quercitol, viscumitol, bornesitol, conduritol, ononitol, pinitol, pinpollitol, ciceritol, quebrachitol, quinic acid, shikimic acid, and valienol, the at least one cyclitol preferably being myo-inositol,
the at least one saccharic acid from which the substituted sugars derive is selected from the group consisting of aldonic acids or aldaric acids, and/or
the at least one sugar amine from which the substituted sugars derive is selected from the group consisting of 1-amino-1-deoxyalditols or alpha-omega-diamino-alpha-omega-dideoxyalditols.

5. The method according to any one of the preceding claims, **characterized in that** the at least one substituted sugar is selected from the group consisting of the following compounds: 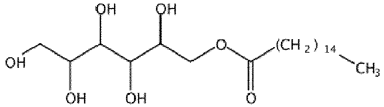 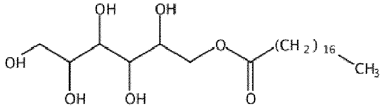 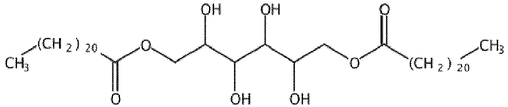 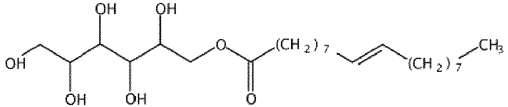 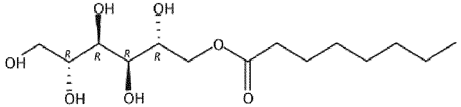 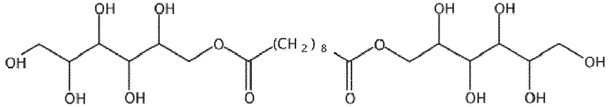 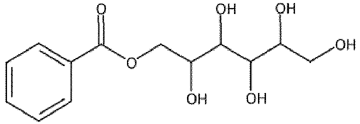 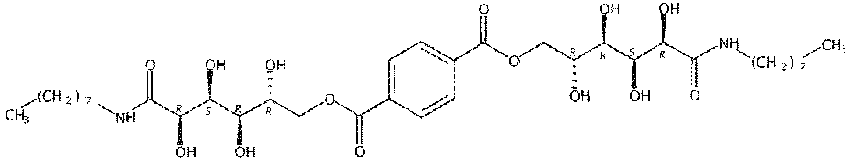 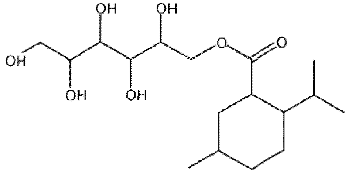 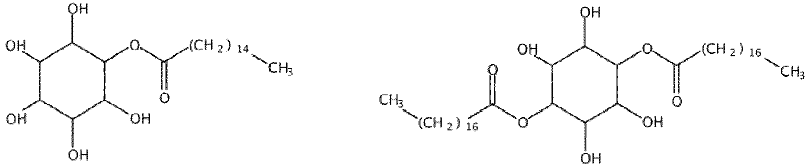 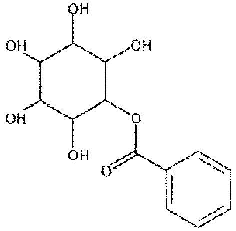 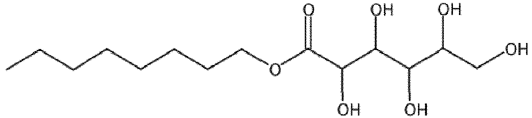 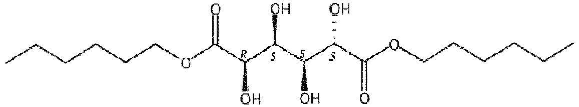 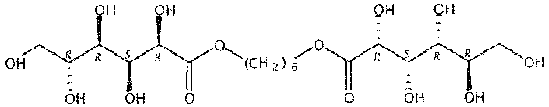 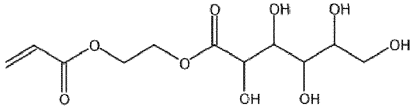 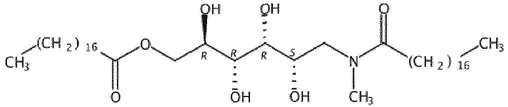 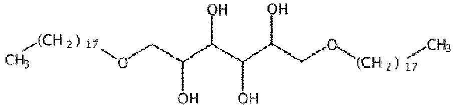 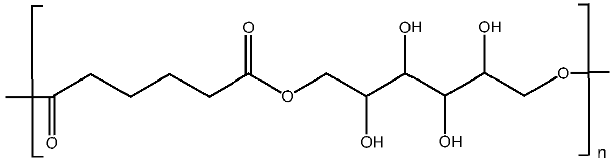 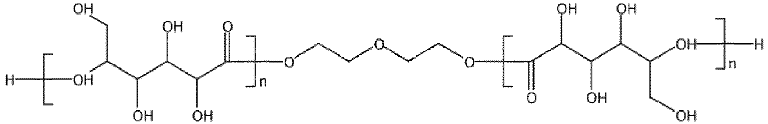 with every occurrence of n being the same or different and being an integer between 1 and 100.

6. The method according to any one of the preceding claims, **characterized in that**, based on 95.0 to 99.99 parts by weight, preferably 99.0 to 99.98 parts by weight, of the thermoplastic plastic recyclate, 0.01 to 5.0 parts by weight, preferably 0.02 to 1.0 parts by weight, of the at least one substituted sugar (component (A)) are introduced.

7. The method according to any one of the preceding claims, **characterized in that**, in addition to the at least one substituted sugar, at least one primary antioxidant and/or at least one secondary antioxidant (component (B)) are introduced into the thermoplastic plastic recyclate, preferably
the at least one primary antioxidant being selected from the group consisting of phenolic antioxidants, amines, lactones, and mixtures thereof and/or
the at least one secondary antioxidant being selected from the group consisting of phosphorus compounds, in particular phosphites and phosphonites, organosulfur compounds, in particular sulfides and disulfides, and mixtures thereof.

8. The method according to the preceding claim, **characterized in that** at least one primary antioxidant and at least one secondary antioxidant are introduced into the thermoplastic plastic recyclate, and in particular component (A) and component (B) are introduced into the thermoplastic recyclate at a weight ratio of 95:5 to 5:95, preferably 90:10 to 10:90, and particularly preferably 80:20 to 20:80.

9. The method according to any one of the two preceding claims, **characterized in that** components (A) and/or (B) are introduced by
mixing the components (A) and/or (B) present as solids with the thermoplastic plastic recyclate present as a solid, melting the mixture thus produced, and subsequent cooling; or
melting the components (A) and/or (B) present as solids and introducing the melt thus produced into a melt of the thermoplastic plastic recyclate
into the thermoplastic plastic recyclate.

10. The method according to any one of claims 7 to 9, **characterized in that**, based on 91 to 99.94 parts by weight, preferably 98.5 to 99.91 parts by weight, of the thermoplastic plastic recyclate,
(A) 0.02 to 3 parts by weight, preferably 0.03 to 0.5 parts by weight, of the at least one substituted sugar (component (A)); and
(B) 0.04 to 6 parts by weight, preferably 0.06 to 1 part by weight, of the at least one primary antioxidant and/or of the at least one secondary antioxidant (component (B))
are introduced.

11. A plastic composition, comprising or consisting of:
(A) at least one substituted sugar selected from the group consisting of
(a1) at least one ester and/or ether of an alditol or a cyclitol;
(a2) at least one ester of a saccharic acid; and/or
(a3) at least one amide and/or substituted amine of an amino sugar,
and mixtures and combinations thereof, and
(B) at least one thermoplastic plastic recyclate,
the plastic composition preferably comprising or consisting of 0.01 to 5.0 parts by weight, preferably 0.02 to 1.0 part by
weight, of the at least one substituted sugar (component (A)) and 95.0 to 99.99, preferably 99.0 to 99.98 parts by weight of the
thermoplastic plastic recyclate.

12. The plastic composition according to the preceding claim, comprising or consisting of:
at least one substituted sugar (component (A));
at least one primary antioxidant and/or at least one secondary antioxidant (component (B)); and
at least one thermoplastic plastic recyclate,
the plastic composition preferably comprising or consisting of
0.02 to 3 parts by weight, preferably 0.03 to 0.5 parts by weight, of the at least one substituted sugar (component (A));
0.04 to 6 parts by weight, preferably 0.06 to 1 part by weight, of at least one primary antioxidant and/or at least one secondary antioxidant (component (B)), in particular 0.02 to 3 parts by weight, preferably 0.03 to 0.5 parts by weight of the at least one primary antioxidant (component (B1)), and 0.02 to 3 parts by weight, preferably 0.03 to 0.5 parts by weight, of at least one secondary antioxidant (component (B2)); and
91 to 99.94 parts by weight, preferably 98.5 to 99.91 parts by weight, of at least one thermoplastic plastic recyclate.

13. The plastic composition according to any one of the two preceding claims, **characterized in that** the plastic composition additionally comprises at least one additive selected from the group consisting of UV absorbers, light stabilizers, metal deactivators, filler deactivators, antiozonants, nucleation agents, anti-nucleation agents, impact strength enhancers, plasticizers, lubricants, rheology modifiers, thixotropic agents, chain extenders, optical brighteners, antimicrobial active agents, antistatic agents, slip agents, anti-blocking agents, coupling agents, crosslinking agents, anti-crosslinking agents, hydrophilizing agents, hydrophobing agents, bonding agents, dispersing agents, compatibilizers, oxygen scavengers, acid scavengers, expanding agents, degradation additives, defoaming agents, odor scavengers, marking agents, anti-fogging agents, fillers, reinforcement agents, and mixtures thereof.

14. A molded part producible from a plastic composition according to any one of claims 11 to 13, in particular in the form of injection molded parts, foils, films, lacquers, coatings, foams, fibers, cables, tubes, profiled sections, hollow bodies, ribbons, membranes, for example geomembranes, lubricants, colorants and/or adhesives, produced by way of extrusion, injection molding, blow molding, calendering, pressing, spinning and/or rotomolding, for example for the electrical industry, for the construction industry, for the transport industry, for medical applications, for household and electrical appliances, for vehicle parts, for consumer items, for packaging, for furniture, and/or for textiles.

15. A stabilizer composition for stabilizing thermoplastic plastic recyclates against oxidative, thermal and/or actinic degradation, encompassing
(A) at least one substituted sugar (component (A)), selected from the group consisting of
(a1) at least one ester and/or ether of an alditol or a cyclitol;
(a2) at least one ester of a saccharic acid; and/or
(a3) at least one amide and/or substituted amine of an amino sugar,
and mixtures and combinations thereof,
(B) at least one primary antioxidant and/or at least one secondary antioxidant (component (B)),
the component (A) and the component (B) preferably being present at a weight ratio of 95:5 to 5:95, more preferably of 90:10 to 10:90, and particularly preferably of 80:20 to 20:80.

16. Use of at least one substituted sugar (component (A)), selected from the group consisting of
(a1) at least one ester and/or ether of an alditol or a cyclitol;
(a2) at least one ester of a saccharic acid, and/or
(a3) at least one amide and/or substituted amine of an amino sugar, and mixtures and combinations thereof,
or a stabilizer composition according to the preceding claim
for stabilizing thermoplastic plastic recyclates against oxidative, thermal, and/or actinic degradation.

## Revendications

1. Procédé pour stabiliser des produits recyclés thermoplastiques contre une dégradation oxydative, thermique et/ou actinique, selon lequel
(A) au moins un sucre substitué choisi dans le groupe constitué par
(a1) au moins un ester et/ou un éther d'un alditol ou d'un cyclitol,
(a2) au moins un ester d'un acide saccharique, et/ou
(a3) au moins un amide et/ou une amine substituée d'un sucre aminé,
ainsi que leurs mélanges et combinaisons,
sont introduits dans un produit recyclé thermoplastique.

2. Procédé selon la revendication 1, **caractérisé en ce que** le au moins un sucre substitué présente au moins 3, de préférence au moins 4 groupes OH libres et/ou est mono- ou disubstitué.

3. Procédé selon l'une quelconque des revendications précédentes, **caractérisé en ce que** le au moins un alditol dont dérivent les sucres substitués répond à la formule brute
HOCH₂[CH(OH)]ₙCH₂OH,
R₁-OCH₂[CH(OH)]ₙCH₂OH,
ou
HOCH₂[CH(OH)]ₙ[CH(OR₁)]CH₂OH
avec n = 2-6, de préférence n = 3-5, dans lequel R₁ est un reste de sucre éventuellement substitué, en particulier choisi dans le groupe constitué par le thréitol, l'érythritol, le galactitol, le mannitol, le ribitol, le sorbitol, le xylitol, l'arabitol, l'isomalt, le lactitol, le maltitol, le maltotritol et les oligo- et polysaccharides hydrogénés à terminaison polyol, et leurs mélanges,
dans lequel le au moins un alditol est de préférence choisi dans le groupe constitué par l'érythritol, le mannitol, l'isomalt, le maltitol et leurs mélanges.

4. Procédé selon l'une quelconque des revendications précédentes, **caractérisé en ce que**
le au moins un cyclitol dont dérivent les sucres substitués est choisi dans le groupe constitué par l'inositol, le quercitol, le viscomitol, le bornésite, le conduritol, l'ononitol, le pinitol, le pinpollitol, le ciceritol, le quebrachitol, l'acide quinique, l'acide shikimique et le valiénol, dans lequel le au moins un cyclitol est de préférence le myo-inositol,
le au moins un acide saccharique, dont dérivent les sucres substitués, est choisi dans le groupe constitué par les acides aldoniques ou les acides aldariques, et/ou
le au moins un aminosucre dont dérivent les sucres substitués est choisi dans le groupe constitué par les 1-amino-1-désoxyalditols ou les alpha-omega-diamino-alpha-omega-didésoxyal-ditols.

5. Procédé selon l'une quelconque des revendications précédentes, **caractérisé en ce que** le au moins un sucre substitué est choisi dans le groupe constitué par les composés suivants : 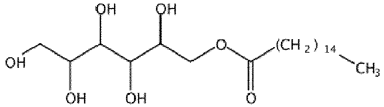 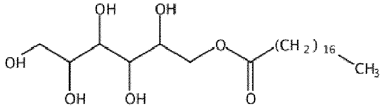 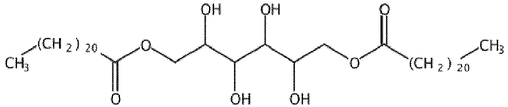 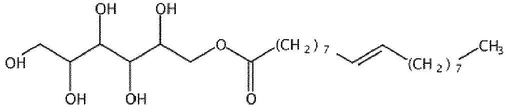 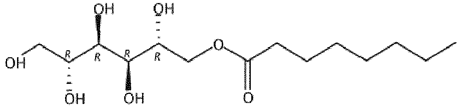 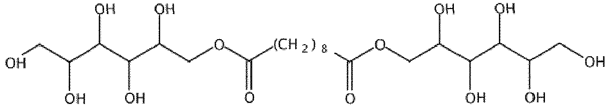 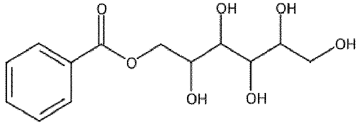 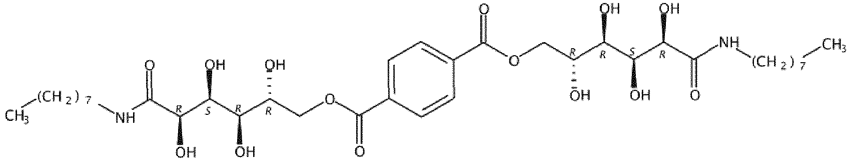 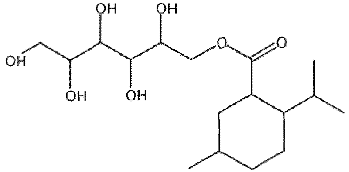 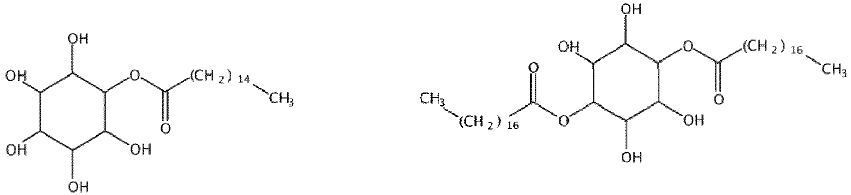 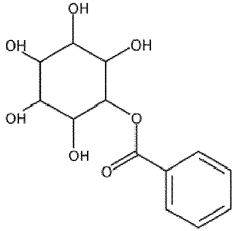 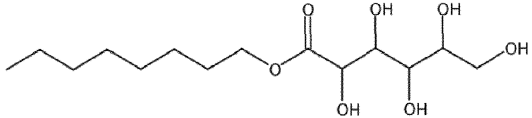 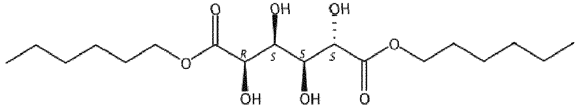 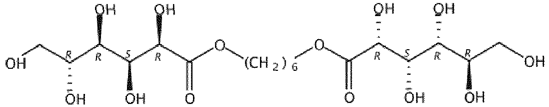 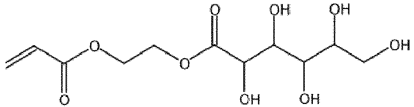 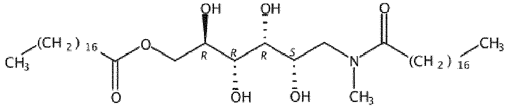 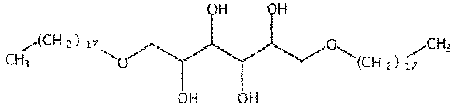 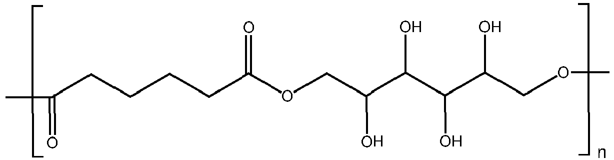 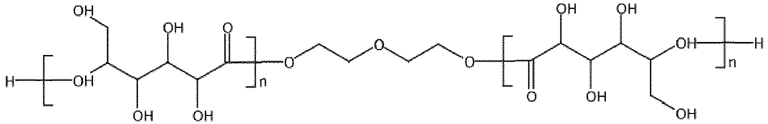 où n est identique ou différent à chaque occurrence et est un nombre entier compris entre 1 et 100.

6. Procédé selon l'une quelconque des revendications précédentes, **caractérisé en ce que**, par rapport à 95,0 à 99,99 parties en poids, de préférence 99,0 à 99,98 parties en poids du produit recyclé thermoplastique, 0,01 à 5,0 parties en poids, de préférence 0,02 à 1,0 partie en poids du au moins un sucre substitué (composant (A)) sont introduites.

7. Procédé selon l'une quelconque des revendications précédentes, **caractérisé en ce que**, en plus d'au moins un sucre substitué, au moins un antioxydant primaire et/ou au moins un antioxydant secondaire (composant (B)) sont introduits dans le produit recyclé thermoplastique, dans lequel de préférence
le au moins un antioxydant primaire est choisi dans le groupe constitué par les antioxydants phénoliques, les amines, les lactones et leurs mélanges, et/ou
le au moins un antioxydant secondaire est choisi dans le groupe constitué par les composés du phosphore, en particulier les phosphites et les phosphonites, les composés organo-soufrés, en particulier les sulfures et les disulfures, et leurs mélanges.

8. Procédé selon la revendication précédente, **caractérisé en ce qu'**au moins un antioxydant primaire et au moins un antioxydant secondaire sont introduits dans le produit recyclé thermoplastique, en particulier le composant (A) et le composant (B) sont introduits dans le produit recyclé thermoplastique dans un rapport pondéral de 95:5 à 5:95, de préférence de 90:10 à 10:90, de manière particulièrement préférée de 80:20 à 20:80.

9. Procédé selon l'une des deux revendications précédentes, **caractérisé en ce que** les composants (A) et/ou (B) sont obtenus par
mélange des composants (A) et/ou (B) se présentant sous forme solide avec le produit recyclé thermoplastique se présentant sous forme solide, fusion du mélange ainsi obtenu et refroidissement subséquent, ou
fusion des composants (A) et/ou (B) se présentant sous forme de matière solide et introduction de la masse fondue ainsi obtenue dans une masse fondue du produit recyclé thermoplastique
dans le produit recyclé thermoplastique.

10. Procédé selon l'une des 7 à 9, **caractérisé en ce que**, par rapport à 91 à 99,94 parties en poids, de préférence 98,5 à 99,91 parties en poids, du produit recyclé thermoplastique
(A) 0,02 à 3 parties en poids, de préférence 0,03 à 0,5 partie en poids du au moins un sucre substitué (composant (A)), et
(B) 0,04 à 6 parties en poids, de préférence 0,06 à 1 partie en poids du au moins un antioxydant primaire et/ou du au moins un antioxydant secondaire (composant (B))
sont introduites.

11. Composition de matière plastique contenant ou consistant en
(A) au moins un sucre substitué choisi dans le groupe constitué par
(a1) au moins un ester et/ou un éther d'un alditol ou d'un cyclitol,
(a2) au moins un ester d'un acide saccharique, et/ou
(a3) au moins un amide et/ou une amine substituée d'un sucre aminé,
ainsi que leurs mélanges et combinaisons, et
(B) au moins un produit recyclé thermoplastique recyclé,
dans laquelle la composition de matière plastique contient de préférence
0,01 à 5,0 parties en poids, de préférence 0,02 à 1,0 partie en poids du au moins un sucre substitué (composant (A)), et
95,0 à 99,99 de préférence 99,0 à 99,98 parties du produit recyclé thermoplastique
ou en est constituée.

12. Composition de matière plastique, selon la revendication précédente, contenant ou consistant en
au moins un sucre substitué (composant (A)),
au moins un antioxydant primaire et/ou au moins un antioxydant secondaire (composant (B)), et
au moins un produit recyclé thermoplastique,
dans laquelle la composition de matière plastique contient de préférence
0,02 à 3 parties en poids, de préférence 0,03 à 0,5 partie en poids de l'au moins un sucre substitué (composant (A)),
0,04 à 6 parties en poids, de préférence 0,06 à 1 partie en poids, d'au moins un antioxydant primaire et/ou d'au moins un antioxydant secondaire (composant (B)), en particulier 0,02 à 3 parties en poids, de préférence 0,03 à 0,5 partie en poids, de l'au moins un antioxydant primaire (composant (B1)) et 0,02 à 3 parties en poids, de préférence 0,03 à 0,5 partie en poids, d'au moins un antioxydant secondaire (composant (B2)), et
91 à 99,94 parties en poids, de préférence 98,5 à 99,91 parties en poids, d'au moins un produit recyclé thermoplastique
ou en est constituée.

13. Composition de matière plastique selon l'une des deux revendications précédentes, **caractérisée en ce que** la composition de matière plastique contient en outre au moins un additif choisi dans le groupe constitué par les absorbeurs d'UV, les stabilisants lumière, les désactivateurs de métaux, les désactivateurs de charge, les antiozonants, les agents de nucléation, les antinucléants, les améliorants de la résistance aux chocs, les plastifiants, les lubrifiants, les modificateurs de rhéologie, les agents thixotropiques, les allongeurs de chaîne, les azurants optiques, les agents antimicrobiens, les agents antistatiques, les agents de glissement, les agents antiadhérents, des agents de couplage, les agents de réticulation, les agents anti-réticulation, les agents hydrophiles, les agents hydrophobes, les promoteurs d'adhésion, les agents dispersants, les agents de compatibilité, les désoxygénants, les piégeurs d'acide, les agents gonflants, les additifs de dégradation, les agents anti-mousse, les piégeurs d'odeur, les agents de marquage, les agents anti-buée, les charges, les matières de renforcement et leurs mélanges.

14. Pièce moulée pouvant être fabriquée à partir d'une composition de matière plastique selon l'une quelconque des revendications 11 à 13, en particulier sous forme de pièces moulées par injection, de feuilles, de films, de laques, de revêtements, de mousses, de fibres, de câbles, de tubes, de profilés, de corps creux, de rubans, de membranes, par exemple des géomembranes, de lubrifiants, de colorants et/ou d'adhésifs fabriqués par extrusion, moulage par injection, moulage par soufflage, calandrage, pressage, filage et/ou rotomoulage par exemple pour l'industrie électrique, pour l'industrie du bâtiment, pour l'industrie des transports, pour des applications médicales, pour des appareils ménagers et électriques, pour des pièces automobiles, pour des articles de consommation, pour des emballages, pour des meubles et/ou pour des textiles.

15. Composition de stabilisateur pour stabiliser des produits recyclés thermoplastiques contre une dégradation oxydative, thermique et/ou actinique, constituée de
(A) au moins un sucre substitué (composant (A)) choisi dans le groupe constitué par
(a1) au moins un ester et/ou un éther d'un alditol ou d'un cyclitol,
(a2) au moins un ester d'un acide saccharique, et/ou
(a3) au moins un amide et/ou une amine substituée d'un sucre aminé,
ainsi que leurs mélanges et combinaisons,
(B) au moins un antioxydant primaire et/ou au moins un antioxydant secondaire (composant (B)),
dans laquelle de préférence le composant (A) et le composant (B) sont présents dans un rapport pondéral de 95:5 à 5:95, de préférence encore de 90:10 à 10:90, de manière particulièrement préférée de 80:20 à 20:80.

16. Utilisation d'au moins un sucre substitué (composant (A)) choisi dans le groupe constitué par
(a1) au moins un ester et/ou un éther d'un alditol ou d'un cyclitol,
(a2) au moins un ester d'un acide saccharique, et/ou
(a3) au moins un amide et/ou une amine substituée d'un sucre aminé,
ainsi que leurs mélanges et combinaisons,
ou d'une composition de stabilisateur selon la revendication précédente,
pour stabiliser des produits recyclés thermoplastiques contre une dégradation oxydative, thermique et/ou actinique.
